(19) Europäisches Patentamt
European Patent Office
Office européen des brevets

(11) **EP 3 142 205 A1**

(12) **EUROPÄISCHE PATENTANMELDUNG**

(43) Veröffentlichungstag:
**15.03.2017 Patentblatt 2017/11**

(51) Int Cl.:
*H02G 5/06* (2006.01)

(21) Anmeldenummer: **15184845.4**

(22) Anmeldetag: **11.09.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(71) Anmelder: **ABB Schweiz AG**
**5400 Baden (CH)**

(72) Erfinder:
• **Straumann, Ulrich**
**8404 Winterthur (CH)**

• **Gremaud, Robin**
**3007 Bern (CH)**
• **Riechert, Uwe**
**8192 Glattfelden (CH)**
• **Molitor, Francoise**
**8057 Zürich (CH)**
• **Tschentscher, Malte**
**59394 Nordkirchen (DE)**

(74) Vertreter: **ABB Patent Attorneys**
**C/o ABB Schweiz AG**
**Intellectual Property (CH-LC/IP)**
**Brown Boveri Strasse 6**
**5400 Baden (CH)**

(54) **GLEICHSPANNUNGS-HOCHSPANNUNGSISOLATOR, HOCHSPANNUNGSANLAGE FÜR GLEICHSTROM MIT GLEICHSPANNUNGS-HOCHSPANNUNGSISOLATOR SOWIE DEREN VERWENDUNG**

(57) Die Erfindung betrifft einen Gleichspannungs-Hochspannungsisolator (100) zur Isolierung eines mit Gleichspannung beaufschlagten Leiters (200), eine Hochspannungsanlage für Gleichstrom mit einem Gleichspannungs-Hochspannungsisolator (100) sowie die Verwendung eines Gleichspannungs-Hochspannungsisolators (100) in einer Hochspannungsanlage für Gleichstrom mit einem mit Gleichspannung beaufschlagten Innenleiter (200). Der Gleichspannungs-Hochspannungsisolator (100) weist einen um eine Isolatorachse (A) verlaufenden Grundkörper (50) aus Isoliermaterial, mindestens eine innerhalb des Grundkörpers (50) verlaufende, vorzugsweise um die Isolatorachse (A) umlaufende äußere Elektrode (10a, 10b), und mindestens eine innerhalb des Grundkörpers verlaufende, vorzugsweise um die Isolatorachse (A) umlaufende innere Elektrode (20) auf, wobei die äußere Elektrode (10a, 10b) im Bereich der äußeren Peripherie des Grundkörpers angeordnet ist, wobei die innere Elektrode (20) im Bereich der inneren Peripherie des Grundkörpers angeordnet ist, wobei im axialen Querschnitt das Verhältnis der durchschnittlichen Gesamtweite (wo) der äußeren Elektrode (10a, 10b) zu der durchschnittlichen Gesamtweite (wi) der inneren Elektrode (20) mindestens 0,6, vorzugsweise mindestens 0,8, besonders vorzugsweise mindestens 1,0 beträgt.

*Fig. 1*

**Beschreibung**

TECHNISCHES GEBIET

Die Erfindung betrifft einen Gleichspannungs-Hochspannungsisolator zur Isolierung eines mit Gleichspannung beaufschlagten Leiters, eine Hochspannungsanlage für Gleichstrom mit einem Gleichspannungs-Hochspannungsisolator sowie die Verwendung eines Gleichspannungs-Hochspannungsisolators in einer Hochspannungsanlage für Gleichstrom mit einem mit Gleichspannung beaufschlagten Innenleiter.

STAND DER TECHNIK

Traditionell erfolgt die Übertragung großer Mengen von elektrischer Energie größtenteils mittels Wechselstroms. Für besondere Anwendungen, beispielsweise für die Synchronisation von Netzen, ist es auch üblich, große Mengen elektrische Energie per Gleichstrom auszutauschen.

Bei beiden Arten von Anwendungsfällen, also sowohl bei der Übertragung von Wechselstrom, als auch bei der Übertagung von Gleichstrom, müssen die zur Übertragung bzw. zum Energieaustausch verwendeten Leitungen oder Kabel gegenüber ihrer Umgebung elektrisch isoliert werden. An die in den unterschiedlichen Fällen verwendeten Hochspannungsisolatoren werden jedoch elektrotechnische Anforderungen gestellt, die zueinander nicht vergleichbar sind. Im Falle von Wechselstrom-Übertragung erfolgen durch die Periodizität der Spannung regelmäßige Nulldurchgänge, so dass eine Ansammlung elektrischer Ladungen auf der Oberfläche der Isolatoren unwahrscheinlich ist. Außerdem überwiegen im Wechselstrombereich die reaktiven Effekte gegenüber den ohmschen Verlusten.

Insbesondere Isolatoren in gasisolierten Systemen sind bei Gleichstromübertragung elektrischen Feldverteilungen unterworfen, die sich nicht mit denjenigen vergleichen lassen, die bei der Übertragung von Wechselstrom auftreten. Die kapazitive Belastung, die bei der Wechselstromübertragung überwiegt, ist nicht mit der resistiven Belastung vergleichbar, welche im Falle von Gleichstromübertragung vorherrscht. Für den Fall von Hochspannungsisolatoren bei Gleichstrom-Übertragung können sich z. B. elektrische Ladungen auf der Isolatoroberfläche ansammeln, was zu verstärkten elektrischen Feldern in der Peripherie des Hochspannungsisolators führt.

In Wechselstromsystemen werden die auftretenden quasistatischen elektrischen Strömungsfelder durch die Geometrie und die Permittivität der dielektrischen Materialien bestimmt, welche für die dort verwendeten Hochspannungsisolatoren zum Einsatz kommen. Im Falle von Gleichstromanwendungen bestimmt vor allem die Leitfähigkeit der Materialien die dielektrische Belastung des Hochspannungsisolators. Bei gasisolierten Hochspannungsanlagen gilt beispielsweise, dass je nach Grad der Leitfähigkeit die Ansammlung von Ladungsträgern auf der Isolatoroberfläche durch unterschiedliche Mechanismen dominiert wird: Einerseits ergibt sich ein gewisser Stromfluss innerhalb des Isolators von dem gleichstrombeaufschlagten Innenleiter; andererseits findet ein Transport von Ladungsträgern im angrenzenden Gasraum statt.

In extremen Fällen kann es zu einer Inversion der Feldverteilung kommen. Außerdem ist die Verteilung des elektrischen Feldes nicht mit den Fällen vergleichbar, in welchen ein Hochspannungsisolator zur Isolierung von Wechselspannung zum Einsatz kommt. Folglich sind Isolatoren, die für Wechselspannung entworfen wurden, in der Regel nicht robust für Gleichstromanwendungen.

Es ist demnach nicht einfach möglich, bestehende Isoliervorrichtungen zur Isolierung von Wechselstrom führenden Leitungen auch für Gleichstrom führende Leitungen zu verwenden.

DARSTELLUNG DER ERFINDUNG

Gemäß einigen Aspekten der vorliegenden Erfindung soll ein Hochspannungsisolator bereitgestellt werden, der für Gleichstrom verwendbar ist und/oder eine verbesserte Feldsteuerwirkung aufweist.

Erfindungsgemäß werden ein Gleichspannungs-Hochspannungsisolator gemäß Anspruch 1, eine Hochspannungsanlage für Gleichstrom gemäß Anspruch 11 sowie die Verwendung eines Gleichspannungs-Hochspannungsisolators gemäß Anspruch 15 angegeben. Vorteilhafte Weiterbildungen und Ausführungsformen sind in den abhängigen Ansprüchen angegeben.

Gemäß einem Aspekt der Erfindung wird ein Gleichspannungs-Hochspannungsisolator zur Isolierung eines mit Gleichspannung beaufschlagten Leiters angegeben, mit einem um eine Isolatorachse verlaufenden Grundkörper aus Isoliermaterial, mindestens einer innerhalb des Grundkörpers verlaufenden, vorzugsweise um die Isolatorachse umlaufenden äußeren Elektrode, mindestens einer innerhalb des Grundkörpers verlaufenden, vorzugsweise um die Isolatorachse umlaufenden inneren Elektrode, wobei die äußere Elektrode im Bereich der äußeren Peripherie des Grundkörpers angeordnet ist, wobei die innere Elektrode im Bereich der inneren Peripherie des Grundkörpers angeordnet ist, wobei im axialen Querschnitt das Verhältnis der durchschnittlichen Gesamtweite der äußeren Elektrode zu der durchschnittlichen Gesamtweite der inneren Elektrode mindestens 0,6, vorzugsweise mindestens 0,8, besonders vorzugsweise mindestens 1,0 beträgt.

Zur Erleichterung der hierin verwendeten geometrischen Bezüge wird die Beschreibung mit Hilfe eines Zylinderkoordinatensystems vorgenommen. Eine der Achsen ist definiert als eine geometrische Achse für Zylinderkoordinaten, welche auf der Ursprungsebene des Zylinderkoordinatensystems senkrecht steht (z-Achse). Diese z-Achse verläuft auch parallel zu der Isolatorachse bzw. fällt mit dieser zusammen. In der Ursprungsebene des Zylinderkoordinatensystems werden ein Polarwinkel $\varphi$ sowie ein Abstand $r$ in radialer Richtung von der z-Achse definiert. Der Grundkörper ist um die Isolatorachse verlaufend (in $\varphi$-Richtung verlaufend) ausgebildet.

Die mindestens eine äußere Elektrode ist derart ausgebildet, dass sie innerhalb des Grundkörpers verläuft. Der axiale Querschnitt bezeichnet einen Schnitt in einer Schnittebene durch den Gleichspannungs-Hochspannungsisolator, wobei die Isolatorachse (die z-Achse) und die Richtung des radialen Abstands (r-Achse) in der Schnittebene verlaufen.

Bei Ausführungsformen ist die mindestens eine äußere Elektrode so ausgebildet, dass sie innerhalb des Grundkörpers um die Isolatorachse umläuft. Unter einem umlaufenden Verlauf der äußeren Elektrode wird verstanden, dass die äußere Elektrode einen geschlossenen Umlauf um die Isolatorachse (in $\varphi$-Richtung) beschreibt. Die mindestens eine äußere Elektrode verläuft also bevorzugt durchgehend im Grundkörper um die Isolatorachse, d. h. dass zumindest Teile der äußeren Elektrode in $\varphi$-Richtung nicht unterbrochen sind. Mit anderen Worten: Bei einem durchgehenden Verlauf gibt es nur axiale Querschnitte im Sinne der obigen Definition, in welchen die äußere Elektrode zumindest in Teilen vorhanden ist.

Es ist in diesem Zusammenhang aber auch möglich, die äußere Elektrode derart auszubilden, dass bei einem Umlauf um die Isolatorachse (in $\varphi$-Richtung) die äußere Elektrode in kleineren Bereichen in Umlaufrichtung unterbrochen ist. Dies kann z. B. dann vorteilhaft sein, wenn die äußere Elektrode aus mehreren Elementen in Umlaufrichtung, beispielsweise aus zwei Halbelementen zusammengesetzt ist. Eine Unterbrechung in kleineren Bereichen bedeutet beispielsweise, dass bezogen auf einen Umlauf um die Isolatorachse die äußere Elektrode zu mindestens 90% vorhanden ist.

Die mindestens eine innere Elektrode ist derart ausgebildet, dass sie innerhalb des Grundkörpers verläuft.

Bei Ausführungsformen ist die mindestens eine innere Elektrode so ausgebildet, dass sie innerhalb des Grundkörpers um die Isolatorachse umläuft. Unter einem umlaufenden Verlauf der inneren Elektrode wird verstanden, dass die innere Elektrode einen geschlossenen Umlauf um die Isolatorachse (in $\varphi$-Richtung) beschreibt. Die mindestens eine innere Elektrode verläuft also bevorzugt durchgehend im Grundkörper um die Isolatorachse, d. h. dass zumindest Teile der inneren Elektrode in $\varphi$-Richtung nicht unterbrochen sind. Mit anderen Worten: Bei einem durchgehenden Verlauf gibt es nur axiale Querschnitte im Sinne der obigen Definition, in welchen die innere Elektrode zumindest in Teilen vorhanden ist.

Es ist in diesem Zusammenhang aber auch möglich, die innere Elektrode derart auszubilden, dass bei einem Umlauf um die Isolatorachse (in $\varphi$-Richtung) die innere Elektrode in kleineren Bereichen in Umlaufrichtung unterbrochen ist. Dies kann z. B. dann vorteilhaft sein, wenn die innere Elektrode aus mehreren Elementen in Umlaufrichtung, beispielsweise aus zwei Halbelementen zusammengesetzt ist. Eine Unterbrechung in kleineren Bereichen bedeutet beispielsweise, dass bezogen auf einen Umlauf um die Isolatorachse die innere Elektrode zu mindestens 90% vorhanden ist.

Die Weite einer Elektrode in einem bestimmten radialen Abstand r von der Isolatorachse ist deren Ausdehnung in der Schnittebene in Richtung einer Parallelen zu der Isolatorachse im radialen Abstand r.

Wenn mehrere äußere Elektroden vorgesehen sind, ist die Gesamtweite der äußeren Elektrode die Summe der Weiten der äußeren Elektroden. Wenn nur eine einzige äußere Elektrode vorgesehen ist, ist die Gesamtweite der äußeren Elektrode deren Weite. Entsprechend ist dann, wenn mehrere innere Elektroden vorgesehen sind, die Gesamtweite der inneren Elektrode die Summe der Weiten der inneren Elektroden. Wenn nur eine einzige innere Elektrode vorgesehen ist, ist die Gesamtweite der inneren Elektrode deren Weite.

Die durchschnittliche Weite der jeweiligen Elektrode ist wiederum der arithmetische Mittelwert der Weite der Elektrode entlang ihrer radialen Ausdehnung, d. h. zwischen ihrem innersten radialen Abstand und ihrem äußersten radialen Abstand. Die jeweiligen Abstände r sind die in der jeweiligen Schnittebene gemessenen orthogonalen Distanzen von der Isolatorachse zu dem entsprechenden Punkt. Analog ist die durchschnittliche Gesamtweite der jeweiligen Elektrode der arithmetische Mittelwert der Weite aller jeweiligen Elektroden (sämtlicher innerer Elektroden bzw. sämtlicher äußerer Elektroden) entlang ihrer radialen Ausdehnung.

Das Mindestverhältnis der durchschnittlichen Weite ist zumindest bereichsweise bezogen auf den jeweiligen Elektrodenumlauf erfüllt. Gemäß einem Aspekt der vorliegenden Erfindung ist das Mindestverhältnis der durchschnittlichen Weite auf mehr als 75%, bevorzugt mehr als 85%, noch bevorzugter mehr als 95% des jeweiligen Elektrodenumlaufs erfüllt. Besonders bevorzugt sind die innere Elektrode und/oder die äußere Elektrode bezogen auf ihre durchschnittliche Weite homogen ausgebildet, d. h. in jedem axialen Querschnitt weist die betreffende Elektrode im Wesentlichen die gleiche durchschnittliche Weite auf.

Das elektrische Feld bei Gleichstrom im Grundkörper und/oder an der Oberfläche des Grundkörpers ist abhängig von der Stromdichte und der Gleichstrom-Leitfähigkeit (der resistiven oder ohmschen Leitfähigkeit) des Materials des Grundkörpers. Der mit Gleichspannung beaufschlagte Innenleiter bewirkt im Rahmen der Gleichstrom-Leitfähigkeit des Materials des Grundkörpers einen Stromfluss durch den Grundkörper in Richtung eines Geräteteils, das auf einem anderen elektrischen Potential als der Innenleiter liegt; in der Regel ist dies ein Gehäuseteil einer Hochspannungsanlage, an welcher der Hochspannungs-Gleichspannungsisolator zum Einsatz kommt. Der Stromfluss durch den Grundkörper kann zu einem Temperaturgradienten im Isolatormaterial führen, was wiederum zu einem radialen Gradienten der Gleichstrom-Leitfähigkeit führt. Hierdurch kann sich jedoch auch wieder eine Verschiebung des elektrischen Feldes im Grundkörper und/oder an der Oberfläche des Grundkörpers ergeben, was eine unerwünschte Ladungsträgeranhäufung auf der Isolatoroberfläche begünstigen kann.

Gemäß den hierin beschriebenen Ausführungsformen ist mindestens eine innere Elektrode im Grundkörper vorgesehen. Die innere Elektrode ist im Bereich der inneren Peripherie des Grundkörpers angeordnet, d. h. in einem verhältnismäßig geringen Abstand zu dem mit Gleichspannung beaufschlagten Leiter. Bei Ausführungsformen, die weiter unten noch detailliert beschrieben werden, kann es auch vorgesehen sein, dass die innere Elektrode in den mit Gleichspannung beaufschlagten Leiter übergeht. Die innere Elektrode ist so ausgebildet, dass sie auf ein definiertes elektrisches Potential gebracht werden kann, beispielsweise durch einen entsprechenden Anschluss. Das definierte elektrische Potential ist üblicherweise das Potential des mit Gleichspannung beaufschlagten Innenleiters.

Gemäß den hierin beschriebenen Ausführungsformen ist mindestens eine äußere Elektrode im Grundkörper vorgesehen. Die äußere Elektrode ist im Bereich der äußeren Peripherie des Grundkörpers angeordnet, d. h. in einem verhältnismäßig geringen Abstand zu einer radialen Endfläche des Grundkörpers. Die äußere Elektrode ist so ausgebildet, dass sie auf ein definiertes elektrisches Potential gebracht werden kann, beispielsweise durch einen entsprechenden Anschluss. Das definierte elektrische Potential ist üblicherweise das Potential des Gehäuses einer Hochspannungsanlage, an welcher der Gleichspannungs-Hochspannungsisolator zum Einsatz kommt.

Es wurde herausgefunden, dass über das Verhältnis der durchschnittlichen Gesamtweite der äußeren Elektrode zu der durchschnittlichen Gesamtweite der inneren Elektrode die Leitfähigkeit im Grundkörper des Isolators und damit das elektrische Feld im Grundkörper und/oder an der Oberfläche des Grundkörpers vorteilhaft eingestellt werden kann. Dies kann dazu beitragen, die Anhäufung von Ladungsträgern auf der Isolatoroberfläche zu verringern oder zu verhindern. Es hat sich überraschend gezeigt, dass es auf besonders einfache Weise möglich ist, die Anhäufung von Ladungsträgern auf der Isolatoroberfläche wirksam zu verringern oder zu verhindern, wenn das Verhältnis der durchschnittlichen Gesamtweite der äußeren Elektrode zu der durchschnittlichen Gesamtweite der inneren Elektrode mindestens 0,6 beträgt. Es wird vermutet, dass sich diese Wirkung unter anderem dadurch ergibt, dass dem durch den Grundkörper fließenden Strom auf beiden Seiten, d. h. an der inneren Elektrode und an der äußeren Elektrode, eine vorteilhafte Fläche zum Fließen angeboten wird.

Bevorzugt beträgt das Verhältnis der durchschnittlichen Gesamtweite der äußeren Elektrode zu der durchschnittlichen Gesamtweite der inneren Elektrode mindestens 0,8, noch bevorzugter mindestens 1,0.

Bei Ausführungsformen liegt die Gesamtweite der äußeren Elektrode im Bereich zwischen 32 mm und 42 mm, vorzugsweise im Bereich zwischen 35 mm und 40 mm. Bei Ausführungsformen liegt die Gesamtweite der inneren Elektrode im Bereich zwischen 25 mm und 35 mm, vorzugsweise im Bereich zwischen 28 mm und 33 mm.

Bei Ausführungsformen beträgt im axialen Querschnitt das Verhältnis der durchschnittlichen Gesamtweite der äußeren Elektrode zu der durchschnittlichen Gesamtweite der inneren Elektrode maximal 1,2, vorzugsweise maximal 1,0.

Bei Ausführungsformen beträgt das Verhältnis der durchschnittlichen Gesamtweite der inneren Elektrode zu der Weite des Grundkörpers zwischen dem innersten radialen Abstand der inneren Elektrode und dem äußersten radialen Abstand der inneren Elektrode mindestens 0,45, vorzugsweise mindestens 0,55, besonders vorzugsweise mindestens 0,65. Vorzugsweise ist die mindestens eine innere Elektrode im axialen Querschnitt im Wesentlichen spiegelsymmetrisch zu der r-Achse ausgebildet und/oder in der z-Richtung im Grundkörper zentriert. Bei Verwendung mehrerer innerer Elektroden, beispielsweise zweier innerer Elektroden, sind bei Ausführungsformen die inneren Elektroden im axialen Querschnitt im Wesentlichen zueinander spiegelsymmetrisch zu der r-Achse ausgebildet und/oder die inneren Elektroden sind in einem gewissen Abstand voneinander derart angeordnet, dass die jeweilige inneren Elektrode auf jeder der Seiten von der r-Achse betragsmäßig gleich weit von der r-Achse beabstandet ist.

Zumindest bereichsweise befindet sich demnach die innere Elektrode zwischen ihrem innersten radialen Abstand und ihrem äußersten radialen Abstand ausreichend nah an dem jeweiligen Ende des Grundkörpers in z-Richtung. Es hat sich gezeigt, dass gemäß diesem Aspekt der Erfindung der Verlauf der elektrischen Feldlinien bei Gleichstrombeaufschlagung eines Innenleiters weiter verbessert werden kann.

Die jeweilige Elektrode kann in bestimmten axialen Schnittebenen allseitig von Isoliermaterial umgeben sein. Dies schließt nicht aus, dass die Elektrode in anderen axialen Schnittebenen in einer oder mehreren Richtungen weiter ausgedehnt ist, beispielsweise bis zu einer radialen Endfläche des Grundkörpers ausgedehnt ist, um eine Kontaktierung der Elektrode zu ermöglichen.

Bei einer Elektrode, die in der jeweiligen radialen Richtung durch Isoliermaterial begrenzt ist, ist der innerste radiale Abstand der Elektrode der minimale Abstand einer Parallelen zu der Isolatorachse in radialer Richtung von der Isolatorachse, ab welchem zwischen den seitlichen Begrenzungen des Grundkörpers entlang dieser Parallelen Elektrodenmaterial existiert. Entsprechend ist bei einer solchen Elektrode, die in der jeweiligen radialen Richtung durch Isoliermaterial begrenzt ist, der äußerste radiale Abstand der Elektrode der maximale Abstand einer Parallelen zu der Isolatorachse in radialer Richtung von der Isolatorachse, bis zu welchem zwischen den seitlichen Begrenzungen des Grundkörpers entlang dieser Parallelen Elektrodenmaterial existiert.

Die jeweilige Elektrode kann auch derart ausgebildet sein, dass sie in eine weitere leitfähige Struktur übergeht, beispielsweise in den mit Gleichstrom beaufschlagten bzw. beaufschlagbaren Leiter. Die Weite einer solchen Elektrode verjüngt sich in der Regel im Bereich des Übergangs. Eine solche Elektrode ist in der jeweiligen axialen Schnittebene nicht allseitig von Isoliermaterial umgeben.

Beispielsweise ist ein Übergangsbereich von einer Innenelektrode in Richtung eines mit Gleichstrom beaufschlagten bzw. beaufschlagbaren Innenleiters an der Innenelektrode ausgebildet. Der Innenleiter, d. h. der Leiter zum Übertragen des Nominalstroms, kann zumindest teilweise auch ein Teil des Gleichspannungs-Hochspannungsisolators sein. Es ist beispielsweise denkbar, dass eine leitfähige Innenleiter-Armatur zentral im Isolator-Grundkörper vorgesehen ist, welche Befestigungsmöglichkeiten für weitere Teile des Innenleiters bietet, der in einer Hochspannungsanlage für Gleichstrom geführt wird und mittels des Gleichspannungs-Hochspannungsisolators gestützt wird. Der Innenleiter bzw. der Teil des Innenleiters weist in radialer Richtung eine Begrenzungsfläche in einem bestimmten radialen Abstand auf (Begrenzungsflächen-Abstand). In radialer Richtung von dieser Begrenzungsfläche können in der jeweils betrachteten Schnittebene Parallelen zu der Isolatorachse (in $z$-Richtung) gezogen werden, die dann jeweils einen definierten radialen Abstand zur Isolatorachse im Zylinderkoordinatensystem besitzen. Der äußerste radiale Abstand der Elektrode ist weiterhin definiert durch den maximalen Abstand einer Parallelen zu der Isolatorachse in radialer Richtung von der Isolatorachse, bis zu welchem zwischen den seitlichen Begrenzungen des Grundkörpers entlang dieser Parallelen Elektrodenmaterial existiert. Die radiale Ausdehnung des Bereichs zwischen der Begrenzungsfläche und dem äußersten radialen Abstand ist die Differenz zwischen dem äußersten radialen Abstand und dem Begrenzungsflächen-Abstand.

Der innerste radiale Abstand $r_{1i}$ der inneren Elektrode ist in diesem Fall wie folgt definiert:

$$r_{1i} = r_{2i} - [0{,}75 \cdot (r_{2i} - r_b)],$$

wobei $r_{2i}$ der äußerste radiale Abstand der mindestens einen inneren Elektrode ist, und wobei $r_b$ der Begrenzungsflächen-Abstand ist.

Bei Ausführungsformen beträgt das Verhältnis der durchschnittlichen Gesamtweite der äußeren Elektrode zu der Weite des Grundkörpers zwischen dem innersten radialen Abstand der äußeren Elektrode und dem äußersten radialen Abstand der äußeren Elektrode mindestens 0,45, vorzugsweise mindestens 0,55, besonders vorzugsweise mindestens 0,65. Vorzugsweise ist die äußere Elektrode im axialen Querschnitt im Wesentlichen spiegelsymmetrisch zu der r-Achse ausgebildet und/oder in der z-Richtung im Grundkörper zentriert. Bei Verwendung mehrerer äußerer Elektroden, beispielsweise zweier äußerer Elektroden, sind die äußeren Elektroden im axialen Querschnitt im Wesentlichen zueinander spiegelsymmetrisch zu der r-Achse ausgebildet und/oder die äußeren Elektroden sind in einem gewissen Abstand voneinander derart angeordnet, dass die jeweilige äußere Elektrode auf jeder der Seiten von der r-Achse betragsmäßig gleich weit von der r-Achse beabstandet ist.

Zumindest bereichsweise befindet sich demnach die äußere Elektrode zwischen ihrem innersten radialen Abstand und ihrem äußersten radialen Abstand ausreichend nah an dem jeweiligen Ende des Grundkörpers in z-Richtung. Es hat sich gezeigt, dass gemäß diesem Aspekt der Erfindung der Verlauf der elektrischen Feldlinien bei Gleichstrombeaufschlagung eines Innenleiters weiter verbessert werden kann.

Bei Ausführungsformen weist der Grundkörper beim äußersten radialen Abstand der inneren Elektrode eine Weite im Bereich zwischen 48 mm und 58 mm, vorzugsweise im Bereich zwischen 50 mm und 55 mm auf. Bei Ausführungsformen weist der Grundkörper beim innersten radialen Abstand der äußeren Elektrode eine Weite im Bereich zwischen 40 mm und 50 mm, vorzugsweise im Bereich zwischen 43 mm und 48 mm auf.

Bei Ausführungsformen erfüllt die Weite des Grundkörpers in Abhängigkeit vom radialen Abstand folgende Bedingungen:

$$\forall r: -0{,}33 \frac{r-r_{2i}}{r_{1o}-r_{2i}} \cdot w_i + w_i < w(r) < 2 \frac{r-r_{2i}}{r_{1o}-r_{2i}} \cdot w_i + w_i$$

$$\forall r: -0{,}66 \frac{r_{1o}-r}{r_{1o}-r_{2i}} \cdot w_o + w_o < w(r) < 0{,}5 \frac{r_{1o}-r}{r_{1o}-r_{2i}} \cdot w_o + w_o,$$

wobei $w_o$ die durchschnittliche Gesamtweite der äußeren Elektrode ist, wobei $w_i$ die durchschnittliche Gesamtweite der inneren Elektrode ist, wobei $r_{1o}$ der innerste radiale Abstand der mindestens einen äußeren Elektrode ist, und wobei $r_{2i}$ der äußerste radiale Abstand der mindestens einen inneren Elektrode ist. Das Zeichen V bezeichnet den Allquantor, d. h. dass die genannten Bedingungen, bezogen auf den Grundkörper, für jedes r erfüllt sind.

Bei Ausführungsformen verläuft der Grundkörper des Gleichspannungs-Hochspannungsisolators im axialen Querschnitt zwischen dem äußersten radialen Abstand der inneren Elektrode und dem innersten radialen Abstand der äußeren Elektrode konkav. Der Grundkörper kann eine relative Weite $w_{rel}$ aufweisen, die von einem relativen radialen Abstand $x(r)$ abhängt und durch mindestens eine Gruppe von numerischen Stützstellen gegeben ist, wobei die Gruppen der folgenden Tabelle entnommen werden können:

| Gruppe | 1 | 1 | 1 | 1 | 1 | 1 | 1 | 1 | 1 | 1 | |
|---|---|---|---|---|---|---|---|---|---|---|---|
| x | 0 | 0,01 | 0,02 | 0,03 | 0,04 | 0,05 | 0,06 | 0,07 | 0,08 | 0,09 | |
| $w_{rel}(x)$ | 1,000 | 0,603 | 0,510 | 0,482 | 0,504 | 0,588 | 0,838 | 0,921 | 0,915 | 0,900 | |
| Gruppe | 2 | 2 | 2 | 2 | 2 | 2 | 2 | 2 | 2 | 2 | |
| x | 0,1 | 0,11 | 0,12 | 0,13 | 0,14 | 0,15 | 0,16 | 0,17 | 0,18 | 0,19 | |
| $w_{rel}(x)$ | 0,879 | 0,850 | 0,822 | 0,794 | 0,767 | 0,740 | 0,713 | 0,688 | 0,662 | 0,637 | |
| Gruppe | 3 | 3 | 3 | 3 | 3 | 3 | 3 | 3 | 3 | 3 | |
| x | 0,2 | 0,21 | 0,22 | 0,23 | 0,24 | 0,25 | 0,26 | 0,27 | 0,28 | 0,29 | |
| $w_{rel}(x)$ | 0,613 | 0,589 | 0,565 | 0,542 | 0,520 | 0,498 | 0,476 | 0,455 | 0,435 | 0,415 | |
| Gruppe | 4 | 4 | 4 | 4 | 4 | 4 | 4 | 4 | 4 | 4 | |
| x | 0,3 | 0,31 | 0,32 | 0,33 | 0,34 | 0,35 | 0,36 | 0,37 | 0,38 | 0,39 | |
| $w_{rel}(x)$ | 0,395 | 0,376 | 0,357 | 0,339 | 0,321 | 0,304 | 0,287 | 0,271 | 0,255 | 0,240 | |
| Gruppe | 5 | 5 | 5 | 5 | 5 | 5 | 5 | 5 | 5 | 5 | |
| x | 0,4 | 0,41 | 0,42 | 0,43 | 0,44 | 0,45 | 0,46 | 0,47 | 0,48 | 0,49 | |
| $w_{rel}(x)$ | 0,225 | 0,210 | 0,196 | 0,183 | 0,170 | 0,157 | 0,145 | 0,134 | 0,122 | 0,112 | |
| Gruppe | 6 | 6 | 6 | 6 | 6 | 6 | 6 | 6 | 6 | 6 | |
| x | 0,5 | 0,51 | 0,52 | 0,53 | 0,54 | 0,55 | 0,56 | 0,57 | 0,58 | 0,59 | |
| $w_{rel}(x)$ | 0,101 | 0,092 | 0,082 | 0,074 | 0,065 | 0,057 | 0,050 | 0,043 | 0,037 | 0,031 | |
| Gruppe | 7 | 7 | 7 | 7 | 7 | 7 | 7 | 7 | 7 | 7 | |
| x | 0,6 | 0,61 | 0,62 | 0,63 | 0,64 | 0,65 | 0,66 | 0,67 | 0,68 | 0,69 | |
| $w_{rel}(x)$ | 0,025 | 0,020 | 0,015 | 0,011 | 0,008 | 0,004 | 0,002 | 0,000 | 0,002 | 0,007 | |
| Gruppe | 8 | 8 | 8 | 8 | 8 | 8 | 8 | 8 | 8 | 8 | |
| x | 0,7 | 0,71 | 0,72 | 0,73 | 0,74 | 0,75 | 0,76 | 0,77 | 0,78 | 0,79 | |
| $w_{rel}(x)$ | 0,017 | 0,029 | 0,046 | 0,066 | 0,090 | 0,118 | 0,149 | 0,185 | 0,224 | 0,268 | |
| Gruppe | 9 | 9 | 9 | 9 | 9 | 9 | 9 | 9 | 9 | 9 | |
| x | 0,8 | 0,81 | 0,82 | 0,83 | 0,84 | 0,85 | 0,86 | 0,87 | 0,88 | 0,89 | |
| $w_{rel}(x)$ | 0,315 | 0,367 | 0,424 | 0,485 | 0,550 | 0,659 | 0,697 | 0,697 | 0,697 | 0,697 | |
| Gruppe | 10 | 10 | 10 | 10 | 10 | 10 | 10 | 10 | 10 | 10 | 10 |
| x | 0,9 | 0,91 | 0,92 | 0,93 | 0,94 | 0,95 | 0,96 | 0,97 | 0,98 | 0,99 | 1 |
| $w_{rel}(x)$ | 0,697 | 0,697 | 0,697 | 0,697 | 0,697 | 0,697 | 0,697 | 0,697 | 0,697 | 0,697 | 0,697 |

Der relative radiale Abstand $x(r)$ leitet sich aus dem eigentlichen Radius, also dem radialen Abstand von der Achse, gemessen in mm, wie folgt her:

$$x(r) = \frac{r - r_{\min}}{r_{\max} - r_{\min}}$$

Hierbei bezeichnet $r_{\min}$ den minimalen radialen Abstand des Grundkörpers von der Achse, also den radialen Abstand ausgehend von der Achse, ab welchem der Grundkörper in Radialrichtung beginnt. Ähnlich bezeichnet $r_{\max}$ den maximalen radialen Abstand des Grundkörpers von der Achse, also den radialen Abstand, bis zu welchem der Grundkörper in Radialrichtung ausgedehnt ist.

Die relative Weite $w_{rel}$ selbst ist wie folgt definiert:

$$w_{rel}(x) = \frac{w(x) - w_{\min}}{w_{\max} - w_{\min}} \pm \Delta w_{rel}$$

Hierbei ist w(x) die Weite des Grundkörpers im relativen radialen Abstand x, gemessen in mm. Es bezeichnen $w_{\min}$ die minimale Weite des Grundkörpers und $w_{\max}$ die maximale Weite des Grundkörpers. $\Delta w_{rel}$ ist ein Toleranzbereich für die durch die numerischen Stützstellen der Tabelle gegebenen Werte. $\Delta w_{rel}$ beträgt 10%.

Bevorzugt ist es vorgesehen, dass unter der mindestens einen Gruppe zumindest die Gruppe 1 ist. Gemäß einem Aspekt weist der Grundkörper eine relative Weite $w_{rel}$ auf, die von dem relativen radialen Abstand x(r) abhängt und durch mindestens zwei oder durch mindestens drei der Gruppen von numerischen Stützstellen gegeben ist. Bevorzugt ist es vorgesehen, dass unter den mindestens zwei oder unter den mindestens drei der Gruppen die Gruppe 1 ist. Gemäß einem weiteren Aspekt ist vorgesehen, dass der Grundkörper eine relative Weite $w_{rel}$ aufweist, die von dem relativen radialen Abstand x(r) abhängt und durch sämtliche der Gruppen gegeben ist.

Bei Ausführungsformen verläuft der Grundkörper des Gleichspannungs-Hochspannungsisolators im axialen Querschnitt zwischen dem äußersten radialen Abstand der inneren Elektrode und dem innersten radialen Abstand der äußeren Elektrode konkav. Der Grundkörper kann eine relative Weite $w_{rel}$ aufweisen, die von einem relativen radialen Abstand x(r) abhängt und durch mindestens eine Gruppe von numerischen Stützstellen gegeben ist, wobei die Gruppen der folgenden Tabelle entnommen werden können:

| Gruppe | 1 | 1 | 1 | 1 | 1 | 1 | 1 | 1 | 1 | 1 | |
|---|---|---|---|---|---|---|---|---|---|---|---|
| x | 0 | 0,01 | 0,02 | 0,03 | 0,04 | 0,05 | 0,06 | 0,07 | 0,08 | 0,09 | |
| $w_{rel}(x)$ | 1,000 | 0,989 | 0,978 | 0,968 | 0,957 | 0,946 | 0,935 | 0,925 | 0,914 | 0,900 | |
| Gruppe | 2 | 2 | 2 | 2 | 2 | 2 | 2 | 2 | 2 | 2 | |
| x | 0,1 | 0,11 | 0,12 | 0,13 | 0,14 | 0,15 | 0,16 | 0,17 | 0,18 | 0,19 | |
| $w_{rel}(x)$ | 0,879 | 0,850 | 0,822 | 0,794 | 0,767 | 0,740 | 0,713 | 0,688 | 0,662 | 0,637 | |
| Gruppe | 3 | 3 | 3 | 3 | 3 | 3 | 3 | 3 | 3 | 3 | |
| x | 0,2 | 0,21 | 0,22 | 0,23 | 0,24 | 0,25 | 0,26 | 0,27 | 0,28 | 0,29 | |
| $w_{rel}(x)$ | 0,613 | 0,589 | 0,565 | 0,542 | 0,520 | 0,498 | 0,476 | 0,455 | 0,435 | 0,415 | |
| Gruppe | 4 | 4 | 4 | 4 | 4 | 4 | 4 | 4 | 4 | 4 | |
| x | 0,3 | 0,31 | 0,32 | 0,33 | 0,34 | 0,35 | 0,36 | 0,37 | 0,38 | 0,39 | |
| $w_{rel}(x)$ | 0,395 | 0,376 | 0,357 | 0,339 | 0,321 | 0,304 | 0,287 | 0,271 | 0,255 | 0,24 | |
| Gruppe | 5 | 5 | 5 | 5 | 5 | 5 | 5 | 5 | 5 | 5 | |
| x | 0,4 | 0,41 | 0,42 | 0,43 | 0,44 | 0,45 | 0,46 | 0,47 | 0,48 | 0,49 | |
| $w_{rel}(x)$ | 0,225 | 0,210 | 0,196 | 0,183 | 0,170 | 0,157 | 0,145 | 0,134 | 0,122 | 0,112 | |
| Gruppe | 6 | 6 | 6 | 6 | 6 | 6 | 6 | 6 | 6 | 6 | |
| x | 0,5 | 0,51 | 0,52 | 0,53 | 0,54 | 0,55 | 0,56 | 0,57 | 0,58 | 0,59 | |
| $w_{rel}(x)$ | 0,101 | 0,092 | 0,082 | 0,074 | 0,065 | 0,057 | 0,050 | 0,043 | 0,037 | 0,031 | |
| Gruppe | 7 | 7 | 7 | 7 | 7 | 7 | 7 | 7 | 7 | 7 | |
| x | 0,6 | 0,61 | 0,62 | 0,63 | 0,64 | 0,65 | 0,66 | 0,67 | 0,68 | 0,69 | |
| $w_{rel}(x)$ | 0,025 | 0,020 | 0,015 | 0,011 | 0,008 | 0,004 | 0,002 | 0,000 | 0,002 | 0,007 | |
| Gruppe | 8 | 8 | 8 | 8 | 8 | 8 | 8 | 8 | 8 | 8 | |
| x | 0,7 | 0,71 | 0,72 | 0,73 | 0,74 | 0,75 | 0,76 | 0,77 | 0,78 | 0,79 | |
| $w_{rel}(x)$ | 0,017 | 0,029 | 0,046 | 0,066 | 0,090 | 0,118 | 0,149 | 0,185 | 0,224 | 0,268 | |
| Gruppe | 9 | 9 | 9 | 9 | 9 | 9 | 9 | 9 | 9 | 9 | |
| x | 0,8 | 0,81 | 0,82 | 0,83 | 0,84 | 0,85 | 0,86 | 0,87 | 0,88 | 0,89 | |
| $w_{rel}(x)$ | 0,315 | 0,367 | 0,424 | 0,485 | 0,550 | 0,659 | 0,697 | 0,697 | 0,697 | 0,697 | |
| Gruppe | 10 | 10 | 10 | 10 | 10 | 10 | 10 | 10 | 10 | 10 | 10 |
| x | 0,9 | 0,91 | 0,92 | 0,93 | 0,94 | 0,95 | 0,96 | 0,97 | 0,98 | 0,99 | 1 |

(fortgesetzt)

| $w_{rel}(x)$ | 0,697 | 0,697 | 0,697 | 0,697 | 0,697 | 0,697 | 0,697 | 0,697 | 0,697 | 0,697 | 0,697 |
|---|---|---|---|---|---|---|---|---|---|---|---|

Der relative radiale Abstand x(r) leitet sich wiederum aus dem eigentlichen Radius, also dem radialen Abstand von der Achse, gemessen in mm, wie folgt her:

$$x(r) = \frac{r - r_{\min}}{r_{\max} - r_{\min}}$$

Hierbei bezeichnet $r_{min}$ den minimalen radialen Abstand des Grundkörpers von der Achse, also den radialen Abstand ausgehend von der Achse, ab welchem der Grundkörper in Radialrichtung beginnt. Ähnlich bezeichnet $r_{max}$ den maximalen radialen Abstand des Grundkörpers von der Achse, also den radialen Abstand, bis zu welchem der Grundkörper in Radialrichtung ausgedehnt ist.
Die relative Weite $w_{rel}$ selbst ist wiederum wie folgt definiert:

$$w_{rel}(x) = \frac{w(x) - w_{\min}}{w_{\max} - w_{\min}} \pm \Delta w_{rel}$$

Hierbei ist w(x) die Weite des Grundkörpers im relativen radialen Abstand x, gemessen in mm. Es bezeichnen $w_{min}$ die minimale Weite des Grundkörpers und $w_{max}$ die maximale Weite des Grundkörpers. $\Delta w_{rel}$ ist ein Toleranzbereich für die durch die numerischen Stützstellen der Tabelle gegebenen Werte. $\Delta w_{rel}$ beträgt 10%.

Bevorzugt ist es vorgesehen, dass unter der mindestens einen Gruppe zumindest die Gruppe 1 ist. Gemäß einem Aspekt weist der Grundkörper eine relative Weite $w_{rel}$ auf, die von dem relativen radialen Abstand x(r) abhängt und durch mindestens zwei oder durch mindestens drei der Gruppen von numerischen Stützstellen gegeben ist. Bevorzugt ist es vorgesehen, dass unter den mindestens zwei oder unter den mindestens drei der Gruppen die Gruppe 1 ist. Noch bevorzugter ist es vorgesehen, dass unter den mindestens zwei oder unter den mindestens drei der Gruppen die Gruppen 1 und 2 sind. Gemäß einem weiteren Aspekt ist vorgesehen, dass der Grundkörper eine relative Weite $w_{rel}$ aufweist, die von dem relativen radialen Abstand x(r) abhängt und durch sämtliche der Gruppen gegeben ist.
Bei Ausführungsformen weist der Gleichspannungs-Hochspannungsisolator zumindest Teile eines Innenleiters auf. Typischerweise ist ein solcher Teil eines Innenleiters als leitfähige Armatur gebildet, welche Befestigungsmöglichkeiten für weitere Teile des Innenleiters bietet, die z. B. innerhalb einer Hochspannungsanlage geführt werden und von dem Gleichspannungs-Hochspannungsisolator gestützt werden.
Bei Ausführungsformen weist der Gleichspannungs-Hochspannungsisolator genau eine innere Elektrode auf, die in den Innenleiter übergeht, wobei die innere Elektrode eine durchschnittliche Gesamtweite im Bereich zwischen 32 mm und 42 mm, vorzugsweise im Bereich zwischen 35 mm und 40 mm, besonders vorzugsweise von ungefähr 38,5 mm aufweist. Der Gleichspannungs-Hochspannungsisolator weist gemäß dieser Ausführungsform genau eine erste äußere Elektrode und genau eine zweite äußere Elektrode aufweist, welche eine durchschnittliche Gesamtweite im Bereich zwischen 25 mm und 35 mm, vorzugsweise im Bereich zwischen 28 mm und 33 mm, besonders vorzugsweise von ungefähr 29 mm aufweisen. Der Grundkörper verläuft gemäß dieser Ausführungsform im axialen Querschnitt zwischen dem äußersten radialen Abstand der inneren Elektrode und dem innersten radialen Abstand der äußeren Elektrode konkav, wobei der Grundkörper beim äußersten radialen Abstand der inneren Elektrode eine Weite im Bereich zwischen 48 mm und 58 mm, vorzugsweise im Bereich zwischen 50 mm und 55 mm, besonders vorzugsweise von ungefähr 52,5 mm aufweist, und wobei der Grundkörper beim innersten radialen Abstand der äußeren Elektrode eine Weite im Bereich zwischen 40 mm und 50 mm, vorzugsweise im Bereich zwischen 43 mm und 48 mm, besonders vorzugsweise von ungefähr 45,5 mm aufweist.
Bei Ausführungsformen ist der Grundkörper des Gleichspannungs-Hochspannungsisolators als Scheibenisolator-Grundkörper ausgebildet. Der Gleichspannungs-Hochspannungsisolator weist insbesondere eine Scheibenform mit variabler Dicke (Weite) auf. Der Verlauf des Grundkörpers ist vorzugsweise konkav; dies bedeutet, dass sich die Weite des Grundkörpers ausgehend von dem inneren radialen Bereich mit zunehmendem radialen Abstand von der Isolatorachse zunächst verjüngt, um anschließend wieder zuzunehmen.
Bei Ausführungsformen ist die mindestens eine äußere Elektrode nach außerhalb des Gleichspannungs-Hochspannungsisolators kontaktierbar ausgebildet. Eine kontaktierbare äußere Elektrode kann z. B. auf ein definiertes äußeres elektrisches Potential gebracht werden, beispielsweise ein Massepotential. Die mindestens eine äußere Elektrode kann insbesondere kontaktiert sein, wenn der Gleichspannungs-Hochspannungsisolator in einer Hochspannungsanlage für Gleichstrom eingesetzt wird, wie unten beschrieben. Es kann vorgesehen sein, dass die äußere Elektrode auf ein definiertes äußeres elektrisches Potential gebracht ist, beispielsweise das Massepotential.

Alternativ oder zusätzlich ist bei Ausführungsformen die mindestens eine innere Elektrode nach außerhalb des Gleichspannungs-Hochspannungsisolators kontaktierbar ausgebildet Eine kontaktierbare innere Elektrode kann z. B. auf ein definiertes äußeres elektrisches Potential gebracht werden, beispielsweise das Potential eines gleichstrombeaufschlagten Innenleiters. Die mindestens eine innere Elektrode kann insbesondere kontaktiert sein, wenn der Gleichspannungs-Hochspannungsisolator in einer Hochspannungsanlage für Gleichstrom eingesetzt wird, wie unten beschrieben. Es kann vorgesehen sein, dass die innere Elektrode auf ein definiertes äußeres elektrisches Potential gebracht ist, beispielsweise das Potential des Innenleiters.

Gemäß einem weiteren Aspekt der Erfindung wird eine Hochspannungsanlage für Gleichstrom angegeben, die einen hierin beschriebenen Gleichspannungs-Hochspannungsisolator und einen mit Gleichspannung beaufschlagbaren Innenleiter aufweist. Bei Ausführungsformen ist die Hochspannungsanlage für Gleichstrom eine gasisolierte Hochspannungsanlage für Gleichstrom. Als Füllgas (Isoliergas) wird in der Regel ein solches Gas verwendet, welches eine hohe Durchschlagfestigkeit unter der Einwirkung eines elektrischen Feldes besitzt. Als Füllgas kommt beispielsweise Schwefelhexafluorid ($SF_6$) in Betracht, welches im Gasraum der gasisolierten Hochspannungsanlage enthalten ist und unter einem höheren Druck als der umgebende atmosphärische Druck steht.

Bei Ausführungsformen weist die Hochspannungsanlage für Gleichstrom mindestens eine äußere leitfähige Stützeinrichtung im Bereich der äußeren Peripherie auf, wobei ein erster Winkel von einer ersten Geraden durch einen ersten Punkt und einen zweiten Punkt jeweils auf der Seite, welche der betreffenden äußeren leitfähigen Stützeinrichtung zugewandt ist, wobei sich der erste Punkt auf der Oberfläche des Grundkörpers in einem ersten radialen Abstand von der Isolatorachse befindet, der der innerste radiale Abstand der nächstliegenden äußeren Elektrode ist, und wobei sich der zweite Punkt auf der Oberfläche des Grundkörpers in einem zweiten radialen Abstand von der Isolatorachse befindet, der dem 0,75-fachen des ersten radialen Abstands entspricht; und einer ersten gemeinsamen Tangente an die Oberfläche der betreffenden äußeren leitfähigen Stützeinrichtung und an die Oberfläche, im ersten radialen Abstand, der nächstliegenden äußeren Elektrode eingeschlossen wird, wobei der erste Winkel im Bereich zwischen 70°...100°, vorzugsweise im Bereich zwischen 75°...95°, besonders vorzugsweise im Bereich zwischen 80° und 90° liegt.

Die äußere leitfähige Stützeinrichtung ist beispielsweise ein Flansch, welcher den Gleichspannungs-Hochspannungsisolator fixiert und/oder eine gasdichte Trennung zwischen einem Außenraum und einem gasgefüllten Innenraum der Hochspannungsanlage gewährleistet.

Ein erster Winkel in dem genannten Bereich kann dazu beitragen, den Feldlinienverlauf an der Oberfläche des Grundkörpers vorteilhaft zu beeinflussen, so dass die Akkumulation von Oberflächenladungen weiter verringert oder verhindert wird.

Auch Bestandteil dieser Offenbarung ist eine Hochspannungsanlage für Gleichstrom, die einen Gleichspannungs-Hochspannungsisolator und einen mit Gleichspannung beaufschlagbaren Innenleiter aufweist, wobei der Gleichspannungs-Hochspannungsisolator einen um eine Isolatorachse verlaufenden Grundkörper aus Isoliermaterial, und mindestens eine innerhalb des Grundkörpers verlaufende, vorzugsweise um die Isolatorachse umlaufende äußere Elektrode, mindestens eine innerhalb des Grundkörpers verlaufende, vorzugsweise um die Isolatorachse umlaufende innere Elektrode aufweist, wobei die äußere Elektrode im Bereich der äußeren Peripherie des Grundkörpers angeordnet ist, wobei die innere Elektrode im Bereich der inneren Peripherie des Grundkörpers angeordnet ist, wobei die Hochspannungsanlage für Gleichstrom mindestens eine äußere leitfähige Stützeinrichtung im Bereich der äußeren Peripherie aufweist, wobei ein erster Winkel von einer ersten Geraden durch einen ersten Punkt und einen zweiten Punkt jeweils auf der Seite, welche der betreffenden äußeren leitfähigen Stützeinrichtung zugewandt ist, wobei sich der erste Punkt auf der Oberfläche des Grundkörpers in einem ersten radialen Abstand von der Isolatorachse befindet, der der innerste radiale Abstand der nächstliegenden äußeren Elektrode ist, und wobei sich der zweite Punkt auf der Oberfläche des Grundkörpers in einem zweiten radialen Abstand von der Isolatorachse befindet, der dem 0,75-fachen des ersten radialen Abstands entspricht; und einer ersten gemeinsamen Tangente an die Oberfläche der betreffenden äußeren leitfähigen Stützeinrichtung und an die Oberfläche, im ersten radialen Abstand, der nächstliegenden äußeren Elektrode eingeschlossen wird, wobei der erste Winkel im Bereich zwischen 70°...100°, vorzugsweise im Bereich zwischen 75°...95°, besonders vorzugsweise im Bereich zwischen 80° und 90° liegt.

Gemäß einem weiteren Aspekt der Erfindung weist die Hochspannungsanlage für Gleichstrom mindestens eine innere leitfähige Stützeinrichtung im Bereich der äußeren Peripherie auf, wobei ein zweiter Winkel von einer zweiten Geraden durch einen zweiten Punkt und einen dritten Punkt jeweils auf der Seite, welche der betreffenden inneren leitfähigen Stützeinrichtung zugewandt ist, wobei sich der zweite Punkt auf der Oberfläche des Grundkörpers in einem zweiten radialen Abstand von der Isolatorachse befindet, der dem 0,75-fachen eines ersten radialen Abstands entspricht, wobei der erste radiale Abstand der innerste radiale Abstand der mindestens einen äußeren Elektrode ist, und wobei sich der dritte Punkt auf der Oberfläche des Grundkörpers in einem dritten radialen Abstand von der Isolatorachse befindet, der der äußerste radiale Abstand der nächstliegenden inneren Elektrode ist, und einer zweiten gemeinsamen Tangente an die Oberfläche der betreffenden inneren leitfähigen Stützeinrichtung und an die Oberfläche, im dritten radialen Abstand, der nächstliegenden inneren Elektrode eingeschlossen wird, wobei der zweite Winkel im Bereich zwischen 70°...100°, vorzugsweise im Bereich zwischen 75°...95°, besonders vorzugsweise im Bereich zwischen 80° und 90° liegt.

Die innere periphere Stützeinrichtung ist beispielsweise eine Schirmelektrode oder dergleichen, die am Innenleiter angeordnet ist.

Ein zweiter Winkel in dem genannten Bereich kann dazu beitragen, den Feldlinienverlauf an der Oberfläche des Grundkörpers vorteilhaft zu beeinflussen, so dass die Akkumulation von Oberflächenladungen weiter verringert oder verhindert wird.

Auch Bestandteil dieser Offenbarung ist eine Hochspannungsanlage für Gleichstrom, die einen Gleichspannungs-Hochspannungsisolator und einen mit Gleichspannung beaufschlagbaren Innenleiter aufweist, wobei der Gleichspannungs-Hochspannungsisolator einen um eine Isolatorachse verlaufenden Grundkörper aus Isoliermaterial, und mindestens eine innerhalb des Grundkörpers verlaufende, vorzugsweise um die Isolatorachse umlaufende äußere Elektrode, mindestens eine innerhalb des Grundkörpers verlaufende, vorzugsweise um die Isolatorachse umlaufende innere Elektrode aufweist, wobei die äußere Elektrode im Bereich der äußeren Peripherie des Grundkörpers angeordnet ist, wobei die innere Elektrode im Bereich der inneren Peripherie des Grundkörpers angeordnet ist, wobei die Hochspannungsanlage mindestens eine innere leitfähige Stützeinrichtung im Bereich der äußeren Peripherie aufweist, wobei ein zweiter Winkel von einer zweiten Geraden durch einen zweiten Punkt und einen dritten Punkt jeweils auf der Seite, welche der betreffenden inneren leitfähigen Stützeinrichtung zugewandt ist, wobei sich der zweite Punkt auf der Oberfläche des Grundkörpers in einem zweiten radialen Abstand von der Isolatorachse befindet, der dem 0,75-fachen eines ersten radialen Abstands entspricht, wobei der erste radiale Abstand der innerste radiale Abstand der mindestens einen äußeren Elektrode ist, und wobei sich der dritte Punkt auf der Oberfläche des Grundkörpers in einem dritten radialen Abstand von der Isolatorachse befindet, der der äußerste radiale Abstand der nächstliegenden inneren Elektrode ist, und einer zweiten gemeinsamen Tangente an die Oberfläche der betreffenden inneren leitfähigen Stützeinrichtung und an die Oberfläche, im dritten radialen Abstand, der nächstliegenden inneren Elektrode eingeschlossen wird, wobei der zweite Winkel im Bereich zwischen 70°...100°, vorzugsweise im Bereich zwischen 75°...95°, besonders vorzugsweise im Bereich zwischen 80° und 90° liegt.

Bevorzugt werden die Aspekte, wonach der erste Winkel im Bereich zwischen 70°...100°, vorzugsweise im Bereich zwischen 75°...95°, besonders vorzugsweise im Bereich zwischen 80° und 90° liegt, und wonach der zweite Winkel im Bereich zwischen 70°...100°, vorzugsweise im Bereich zwischen 75°...95°, besonders vorzugsweise im Bereich zwischen 80° und 90° liegt, kombiniert. Die Erfindung ist darauf jedoch nicht beschränkt.

Bei Ausführungsformen ist die Weite des Grundkörpers im radialen Abstand des dritten Punkts kleiner als der Mittelwert der Weite des Grundkörpers zwischen dem radialen Abstand des ersten Punkts und dem 0,4-fachen des ersten radialen Abstands. Dieser Aspekt kann dazu beitragen, dass der Schnittpunkt der ersten Geraden mit der ersten gemeinsamen Tangente in Bezug auf den Schnittpunkt der zweiten Geraden mit der zweiten gemeinsamen Tangente lateral (in Richtung des Innenleiters) ausreichend wenig verschoben ist. Dies kann zu einem vorteilhaften Verlauf entlang der elektrischen Feldlinien entlang der Oberfläche des Grundkörpers beitragen und/oder die Akkumulation von Ladungsträgern auf der Oberfläche weiter verringern.

Gemäß einem weiteren Aspekt der Erfindung wird eine Verwendung eines hierin beschriebenen Gleichspannungs-Hochspannungsisolators in einer hierin beschriebenen Hochspannungsanlage für Gleichstrom angegeben, wobei der Innenleiter mit Gleichspannung beaufschlagt ist. Die Hochspannungsanlage ist insbesondere eine gasisolierte Hochspannungsanlage, und das Füllgas (Isoliergas) findet vorzugsweise Schwefelhexafluorid ($SF_6$) Verwendung.

Bei Ausführungsformen ist bei einer hierin beschriebenen Verwendung des Gleichspannungs-Hochspannungsisolators in der Hochspannungsanlage für Gleichstrom der Verlauf der Weite des Grundkörpers in Abhängigkeit vom radialen Abstand zu der Isolatorachse derart gestaltet, die elektrischen Feldlinien, welche die Oberfläche des Grundkörpers mit einem schaltanlagenseitigen Gehäuse und/oder mit dem Innenleiter und/oder mit einer schaltanlagenseitigen Abschirmung, insbesondere einer gasseitigen Abschirmung verbinden, ausschließlich Verbindungen auf der Oberfläche des Grundkörpers aufweisen, die in einem Bereich für r liegen, für welchen die folgende Bedingung erfüllt ist:

$$r < \frac{(r_{1o} + r_{2i})}{2}$$

wobei $r_{1o}$ der innerste radiale Abstand der mindestens einen äußeren Elektrode ist, und wobei $r_{2i}$ der äußerste radiale Abstand der mindestens einen inneren Elektrode ist.

Ladungsträger, beispielsweise Ionen, wandern an der Außenseite des Gleichspannungs-Hochspannungsisolators entlang der sich dort ausbildenden Feldlinien. Bei einer gasisolierten Hochspannungsanlage ist die Außenseite des Isolators die Gasseite. Gemäß der genannten Bedingung haben die Feldlinien, welche die Oberfläche des Grundkörpers mit dem schaltanlagenseitigen Gehäuse verbinden und/oder die Feldlinien, welche die Oberfläche des Grundkörpers mit dem Innenleiter verbinden und/oder die Feldlinien, welche die Oberfläche des Grundkörpers mit der schaltanlagenseitigen Abschirmung verbinden, ausschließlich Verbindungen auf der Oberfläche des Grundkörpers in der inneren Isolatorhälfte. Die Feldlinien verlaufen damit ausreichend "flach" in dem Sinne, dass Ladungsträger nur innerhalb des Bereichs des Innenleiters an die Oberfläche des Grundkörpers transportiert werden. Dies kann eine Ladungsträgerakkumulation auf der Oberfläche des Grundkörpers weiter verringern oder verhindern. Ferner kann dies dazu beitragen, dass keine oder nur wenige Komponenten der Feldlinien vorhanden sind, welche senkrecht auf die Oberfläche des Grundkörpers gerichtet sind. Dadurch kann sich wiederum ergeben, dass die Anzahl von Ladungsträgern, die aus dem Gasraum an die Oberfläche des Grundkörpers transportiert werden, stark reduziert wird.

Bei Ausführungsformen ist bei einer hierin beschriebenen Verwendung des Gleichspannungs-Hochspannungsisolators in der Hochspannungsanlage für Gleichstrom ein Winkel zwischen den elektrischen Feldlinien und der Oberfläche des Grundkörpers in einem Punkt, in dem die Feldlinie die Isolatoroberfläche außenseitig schneidet, kleiner als 10°, vorzugsweise kleiner als 7°, besonders vorzugsweise kleiner als 5°. Ein ausreichend kleiner Winkel kann ebenfalls dazu beitragen, dass die Anzahl von Ladungsträgern, die aus dem Gasraum an die Oberfläche des Grundkörpers transportiert werden, stark reduziert wird.

KURZE BESCHREIBUNG DER ZEICHNUNGEN

Die Erfindung wird nachstehend anhand der beiliegenden Zeichnungen erläutert, wobei die Figuren zeigen:

Fig. 1    eine schematische Schnittansicht eines Gleichspannungs-Hochspannungsisolators gemäß einer ersten Ausführungsform, mit Teilen einer Hochspannungsanlage;

Fig. 2    eine schematische Schnittansicht eines Gleichspannungs-Hochspannungsisolators gemäß einer zweiten Ausführungsform, mit Teilen einer Hochspannungsanlage;

Fig. 3    eine schematische Schnittansicht eines Gleichspannungs-Hochspannungsisolators gemäß einer dritten Ausführungsform, mit Teilen einer Hochspannungsanlage;

Fig. 4    eine schematische perspektivische Ansicht des Gleichspannungs-Hochspannungsisolators gemäß der dritten Ausführungsform; und

Fig. 5    eine schematische Darstellung der elektrischen Feldlinien bei der Verwendung des Gleichspannungs-Hochspannungsisolators gemäß der dritten Ausführungsform in einer Hochspannungsanlage für Gleichstrom.

AUSFÜHRUNGSFORMEN DER ERFINDUNG

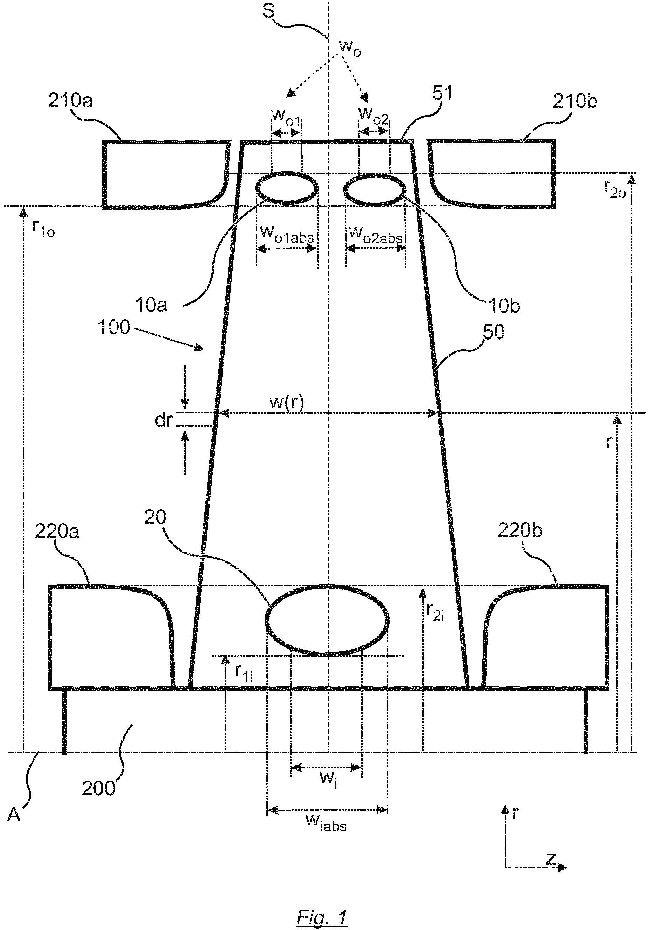

Fig. 1 zeigt eine schematische Schnittansicht eines Gleichspannungs-Hochspannungsisolators 100 gemäß einer ersten Ausführungsform. Der Gleichspannungs-Hochspannungsisolator 100 gemäß der Ausführungsform kann an einer Hochspannungsanlage eingesetzt werden, die teilweise in Fig. 1 mit abgebildet ist und weiter unten noch näher beschrieben wird.

Die in den Fig. 1, 2, 3 und 5 dargestellte Schnittebene ist die r-z-Ebene in einem Zylinderkoordinatensystem, wobei die z-Achse des Systems mit einer Isolatorachse A des Gleichspannungs-Hochspannungsisolators 100 zusammenfällt. Ein Abstand r in radialer Richtung wird in der dargestellten Schnittebene ausgehend von der Isolatorachse A gemessen; des Weiteren ist ein Polarwinkel $\varphi$ definiert, der in der Darstellung in Fig. 1 nicht gezeigt ist und in der Umfangsrichtung des Gleichspannungs-Hochspannungsisolators 100 verläuft.

Ein Grundkörper 50 des Gleichspannungs-Hochspannungsisolators 100 ist z. B. aus einem Isoliermaterial wie z. B. Epoxidharz gebildet, welches mit verschiedenartigen Füllstoffen versetzt sein kann. Der Grundkörper 50 verläuft in Umfangsrichtung $\varphi$ um die Isolatorachse A. Der Querschnittsverlauf des Gleichspannungs-Hochspannungsisolators 100 ist in Fig. 1 nur schematisch angedeutet. In den hierin beschriebenen Ausführungsformen ist der Grundkörper 50 bezüglich einer Symmetrieebene S senkrecht zur z-Achse spiegelsymmetrisch aufgebaut, jedoch nicht auf einen solchen symmetrischen Aufbau beschränkt.

Ein Innenleiter 200, der nicht notwendigerweise Bestandteil des Gleichspannungs-Hochspannungsisolators 100 sein muss, aber zumindest teilweise Bestandteil des Gleichspannungs-Hochspannungsisolators 100 sein kann, verläuft ebenfalls um die Isolatorachse A und wird vom Grundkörper 50 des Gleichspannungs-Hochspannungsisolators 100 gestützt und gehalten. Der Innenleiter 200 ist mit Gleichspannung beaufschlagbar, beispielsweise mit einer hohen Gleichspannung von mehr als $\pm$100 kV oder mehr als $\pm$200 kV.

Als Bestandteile der Hochspannungsanlage sind im Bereich des Innenleiters 200 innere leitfähige Stützeinrichtungen 220a, 220b vorgesehen, welche als Schirmelektroden ausgebildet sind. Im Bereich einer radialen Endfläche 51 des Grundkörpers 50 sind ferner als Bestandteile der Hochspannungsanlage äußere leitfähige Stützeinrichtungen 210a, 220b vorgesehen, welche als Flansche ausgebildet sind.

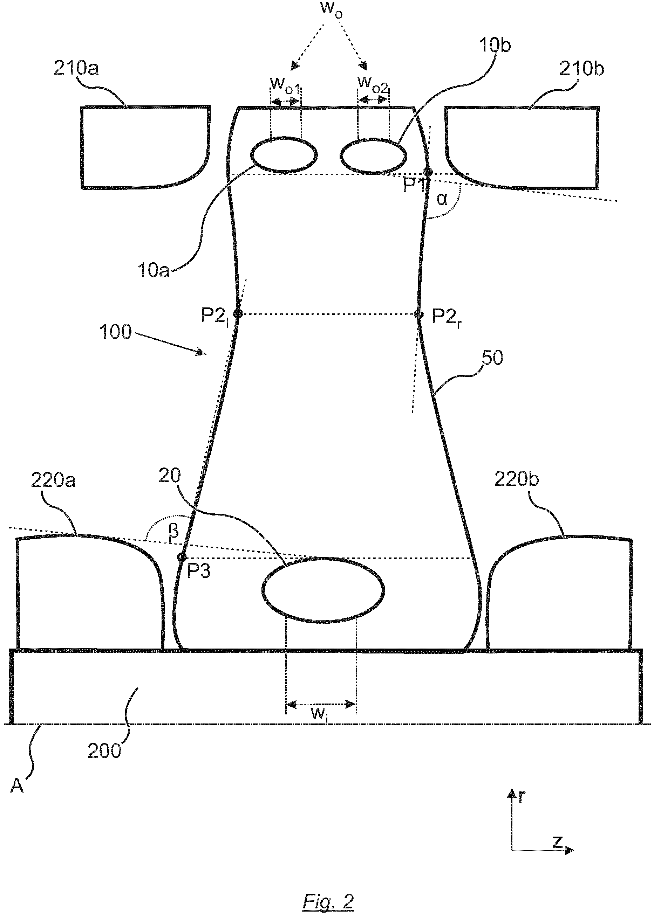

Eine Weite w(r) des Grundkörpers 50 des Gleichspannungs-Hochspannungsisolators 100 in einem bestimmten Abstand r von der Isolatorachse A ist durch die Ausdehnung des Grundkörpers 50 in diesem Abstand r zwischen seinen seitlichen Begrenzungen in der z-Richtung definiert. Der Grundkörper 50 weist in der in Fig. 1 dargestellten Ausführungsform einen solchen konischen Verlauf auf, dass seine Weite ausgehend von dem Bereich, der dem Innenleiter 200 zugewandt ist, in Richtung der radialen Endfläche 51 abnimmt. Die Formgebung ist darauf jedoch nicht beschränkt, wie später auch im Zusammenhang mit der Fig. 2 sowie den Fig. 3 bis 5 noch näher erläutert wird.

In einem Bereich zwischen den inneren leitfähigen Stützeinrichtungen 220a, 220b ist eine umlaufende innere Elektrode 20 im Grundkörper 50 angeordnet, die in dem dargestellten Querschnitt in der r-z-Ebene zentriert zwischen den seitlichen Begrenzungen des Grundkörpers 50 vorgesehen ist. Die innere Elektrode 20 ist in Fig. 1 lediglich schematisch angedeutet und nur zum Zwecke der nachstehenden Erläuterungen in dem dargestellten Querschnitt ovalförmig gezeigt. Der Querschnitt der inneren Elektrode 20 ist nicht auf die dargestellte Ovalform beschränkt.

Die innere Elektrode 20 kann mittels einer in Fig. 1 nicht dargestellten Einrichtung auf ein definiertes elektrisches Potential gebracht werden; in der Regel ist dies das Potential des Innenleiters 200.

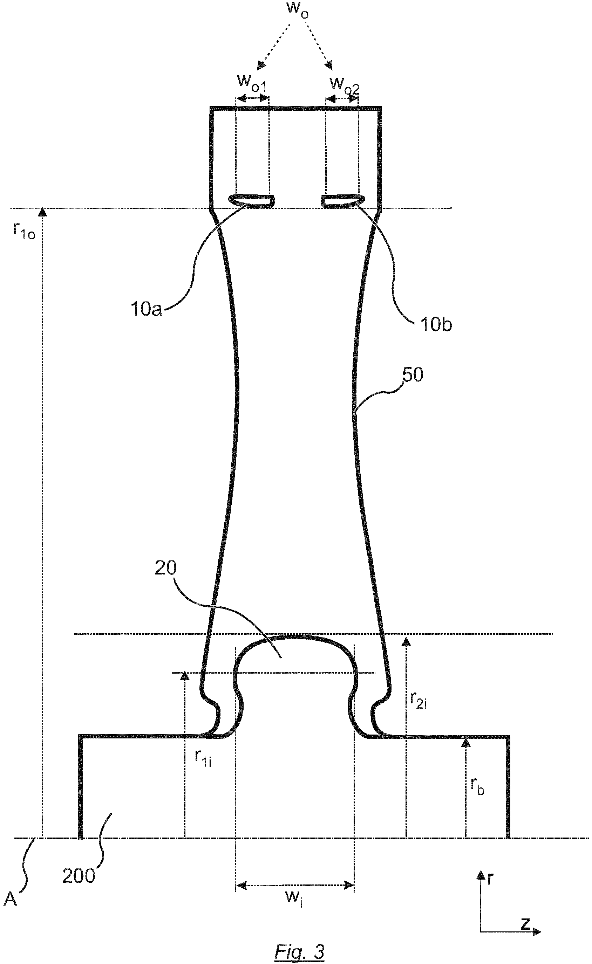

Die innere Elektrode 20 ist in dem in Fig. 1 gezeigten Querschnitt allseitig von dem Isoliermaterial des Grundkörpers 50 umgeben. In diesem Fall gilt Folgendes: Ein innerster radialer Abstand $r_{1i}$ der inneren Elektrode 20 ist derjenige Abstand in radialer Richtung, ab welchem - ausgehend von der Isolatorachse A - erstmalig Elektrodenmaterial der inneren Elektrode 20 zwischen den seitlichen Begrenzungen des Grundkörpers 50 existiert. Entsprechend ist ein äußerster radialer Abstand $r_{2i}$ der inneren Elektrode 20 derjenige Abstand in radialer Richtung, bis zu welchem - wiederum ausgehend von der Isolatorachse A - Elektrodenmaterial der inneren Elektrode 20 zwischen den seitlichen Begrenzungen des Grundkörpers 50 existiert. Andere Definitionen für den innersten radialen Abstand $r_{1i}$, wie hierin verwendet, werden weiter unten im Zusammenhang mit den Fig. 3 bis 5 noch näher erläutert. Die innere Elektrode 20 ist in radialer Richtung (in Richtung der r-Achse) zwischen dem innersten radialen Abstand $r_{1i}$ und dem äußersten radialen Abstand $r_{2i}$ ausgedehnt.

In einem Bereich zwischen den äußeren leitfähigen Stützeinrichtungen 210a, 210b sind eine umlaufende erste äußere Elektrode 10a und eine umlaufende zweite äußere Elektrode 10b im Grundkörper 50 angeordnet. Diese sind in dem dargestellten Querschnitt in der r-z-Ebene zwischen den seitlichen Begrenzungen des Grundkörpers 50 derart angeordnet, dass die erste äußere Elektrode 10a auf der einen Seite zentriert zwischen der Symmetrieebene S des Grundkörpers 50 und dessen einer seitlicher Begrenzung verläuft, während die zweite äußere Elektrode 10b auf der anderen Seite zentriert zwischen der Symmetrieebene S des Grundkörpers 50 und dessen anderer seitlicher Begrenzung verläuft. Auch die äußeren Elektrode 10a, 10b sind in Fig. 1 lediglich schematisch angedeutet und nur zum Zwecke der nachstehenden Erläuterungen in dem dargestellten Querschnitt ovalförmig gezeigt. Der Querschnitt der äußeren Elektroden 10a, 10b ist wiederum nicht auf die dargestellte Ovalform beschränkt.

Die äußeren Elektroden 10a, 10b können mittels einer in Fig. 1 nicht dargestellten Einrichtung auf ein definiertes elektrisches Potential gebracht werden; in der Regel ist dies ein Gehäuse- oder Erdpotential des Gehäuses der Hochspannungsanlage, beispielsweise dasjenige elektrische Potential, auf welchem sich auch die äußeren Stützeinrichtungen 210a, 210b befinden.

Jede der äußeren Elektroden 10a, 10b ist in dem in Fig. 1 gezeigten Querschnitt allseitig von dem Isoliermaterial des Grundkörpers 50 umgeben. In diesem Fall gilt Folgendes: Ein innerster radialer Abstand $r_{1o}$ der jeweiligen äußeren Elektrode 10a, 10b ist derjenige Abstand in radialer Richtung, ab welchem - ausgehend von der Isolatorachse A - erstmalig Elektrodenmaterial der betreffenden äußeren Elektrode 10a, 10b zwischen den seitlichen Begrenzungen des Grundkörpers 50 existiert. Entsprechend ist ein äußerster radialer Abstand $r_{2o}$ der jeweiligen äußeren Elektrode 10a, 10b derjenige Abstand in radialer Richtung, bis zu welchem - wiederum ausgehend von der Isolatorachse A - Elektrodenmaterial der betreffenden äußeren Elektrode 10a, 10b zwischen den seitlichen Begrenzungen des Grundkörpers 50 existiert. Jede der äußeren Elektroden 10a, 10b ist in radialer Richtung (in Richtung der r-Achse) zwischen ihrem innersten radialen Abstand $r_{1o}$ und ihrem äußersten radialen Abstand $r_{2o}$ ausgedehnt. In der in Fig. 1 dargestellten Ausführungsform ist der innerste radiale Abstand $r_{1o}$ und der äußerste radiale Abstand $r_{2o}$ für beide äußeren Elektroden 10a, 10b gleich; demgemäß sind auch ihre jeweiligen radialen Ausdehnungen gleich.

Die Weite einer Elektrode in Abhängigkeit von r ist definiert als deren Ausdehnung in z-Richtung, d. h. deren seitliche Begrenzungen in dem jeweiligen Abstand r. Wenn die betreffende Elektrode im Querschnitt unterbrochen ausgebildet ist, dann wird ihre Weite in Abhängigkeit von r durch ihre äußersten seitlichen Begrenzungen definiert. Dies kann insbesondere der Fall sein, wenn die betreffende Elektrode mit Durchdringungen versehen ist, so dass sie - in Abhängigkeit von $\varphi$ - nur in machen axialen Querschnitten durchgehend ausgebildet ist.

In Richtung der z-Achse weisen die äußeren Elektroden 10a, 10b jeweils eine absolute Weite $w_{o1abs}$ bzw. $w_{o2abs}$ auf. Die jeweilige absolute Weite ist definiert als der Bereich innerhalb der radialen Ausdehnung der betreffenden Elektrode, in welchem die betreffende Elektrode ihre größte Ausdehnung in z-Richtung aufweist.

Für die hierin beschriebenen Zwecke ist die durchschnittliche Weite $w_{o1}$ bzw. $w_{o2}$ der jeweiligen äußeren Elektrode 10a, 10b maßgeblich. Die durchschnittliche Weite $w_{o1}$, $w_{o2}$ ist definiert als der arithmetische Mittelwert der Weite der betreffenden äußeren Elektrode 10a, 10b entlang ihrer radialen Ausdehnung, d. h. zwischen ihrem innersten radialen Abstand $r_{1o}$ und ihrem äußersten radialen Abstand $r_{2o}$.

Im Betrieb wirken die äußeren Elektroden 10a, 10b bezüglich ihrer elektrischen Eigenschaften zusammen. Die durchschnittliche Gesamtweite $w_o$ der äußeren Elektroden 10a, 10b ist daher definiert als die Summe der jeweiligen durchschnittlichen Weiten der einzelnen äußeren Elektroden 10a, 10b. Dies entspricht dem arithmetischen Mittelwert der Weite aller jeweiligen äußeren Elektroden entlang ihrer radialen Ausdehnung. Bei nur einer einzigen äußeren Elektrode ist die durchschnittliche Gesamtweite $w_o$ die durchschnittliche Weite der Einzelelektrode.

Entsprechend gilt für die innere Elektrode 20, dass sie in Richtung der z-Achse eine absolute Weite $w_{iabs}$ aufweist. Wiederum ist die durchschnittliche Weite der inneren Elektrode 20 maßgeblich, welche der arithmetische Mittelwert der Weite der inneren Elektrode 20 entlang ihrer radialen Ausdehnung ist, d. h. zwischen ihrem innersten radialen Abstand $r_{1i}$ und ihrem äußersten radialen Abstand $r_{2i}$. In Fig. 1 ist eine einzelne innere Elektrode 20 vorgesehen, deren durchschnittliche Weite die durchschnittliche Gesamtweite $w_i$ darstellt. Wenn bei Abwandlungen mehrere innere Elektroden vorgesehen sind, gilt analog zu den obigen Ausführungen, dass die durchschnittliche Gesamtweite $w_i$ der inneren Elektroden die Summe der jeweiligen durchschnittlichen Weiten der einzelnen inneren Elektroden ist.

Wie erwähnt, ist die Darstellung der Ausführungsform in Fig. 1 lediglich schematisch. Das Verhältnis der durchschnittlichen Gesamtweite $w_o$ der äußeren Elektrode, d. h. im Fall der Fig. 1 der Summe der jeweiligen durchschnittlichen Weiten der einzelnen äußeren Elektroden 10a, 10b, zu der durchschnittlichen Gesamtweite $w_i$ der inneren Elektrode 20 mindestens 0,6, vorzugsweise mindestens 0,8, besonders vorzugsweise mindestens 1,0. Es hat sich gezeigt, dass bei einem derartigen Verhältnis insbesondere die Akkumulation von Ladungsträgern auf der Oberfläche des Grundkörpers 50 (der Isolatoroberfläche) signifikant verringert werden kann, wenn der Innenleiter 200 mit Gleichspannung beaufschlagt wird.

Außerdem ist bei Ausführungsformen das Verhältnis der durchschnittlichen Gesamtweite $w_o$ der äußeren Elektrode 10a, 10b zu der durchschnittlichen Gesamtweite $w_i$ der inneren Elektrode 20 nicht größer als 1,2, vorzugsweise nicht größer als 1,0. Bei der in Fig. 1 dargestellten Ausführungsform ist dieses Verhältnis ungefähr 1, d. h. die durchschnittlichen Gesamtweiten $w_i$, $w_o$ sind ungefähr gleich groß. Die Erfindung ist jedoch darauf nicht beschränkt.

Ferner ist bei Ausführungsformen das Verhältnis der durchschnittlichen Weite $w_i$ der inneren Elektrode 20 zu der Weite des Grundkörpers mindestens 0,45, vorzugsweise mindestens 0,55, besonders vorzugsweise mindestens 0,65, und zwar zwischen dem innersten radialen Abstand $r_{1i}$ der inneren Elektrode 20 und dem äußersten radialen Abstand $r_{2i}$ der inneren Elektrode 20. Bei der in Fig. 1 dargestellten Ausführungsform ist dieses Verhältnis ungefähr 0,5. Die Erfindung ist jedoch darauf nicht beschränkt.

Außerdem ist bei Ausführungsformen das Verhältnis der durchschnittlichen Gesamtweite $w_o$ der äußeren Elektroden 10a, 10b zu der Weite des Grundkörpers mindestens 0,45, vorzugsweise mindestens 0,55, besonders vorzugsweise mindestens 0,65, und zwar zwischen dem innersten radialen Abstand $r_{1o}$ der äußeren Elektroden 10a, 10b und dem äußersten radialen Abstand $r_{2o}$ der äußeren Elektrode 10a, 10b. Bei der in Fig. 1 dargestellten Ausführungsform ist dieses Verhältnis ungefähr 0,5. Die Erfindung ist jedoch darauf nicht beschränkt.

In Fig. 2 ist eine schematische Schnittansicht eines Gleichspannungs-Hochspannungsisolators 100 gemäß einer zweiten Ausführungsform gezeigt. Gleiche oder gleichwirkende Teile sind in Fig. 1 und in Fig. 2 mit denselben Bezugszeichen versehen, und deren wiederholte Beschreibung wird hier weggelassen.

Der Aufbau des Gleichspannungs-Hochspannungsisolators 100 gemäß der zweiten Ausführungsform entspricht im Wesentlichen demjenigen der ersten Ausführungsform; insbesondere ist die Darstellung in Fig. 2 lediglich schematisch. Auch der Gleichspannungs-Hochspannungsisolator 100 gemäß der zweiten Ausführungsform ist spiegelsymmetrisch bezogen auf eine Symmetrieebene S ausgebildet, auf welcher die z-Achse senkrecht steht; jedoch ist die Erfindung hierauf nicht beschränkt.

Der Verlauf der Weite $w(r)$ des Grundkörpers 50 ist bei der zweiten Ausführungsform jedoch konkav, d. h. ausgehend von einem breiteren Teil in dem Bereich des Grundkörpers 50, der ungefähr beim innersten radialen Abstand der inneren Elektrode 200 beginnt, verjüngt sich der Grundkörper zunächst mit zunehmendem radialen Abstand, um sich anschließend wieder aufzuweiten, und zwar bis zu einem Bereich, der ungefähr beim innersten radialen Abstand der äußeren Elektroden 10a, 10b beginnt.

Der Verlauf der Weite $w(r)$ erfüllt bei dem Ausführungsbeispiel gemäß Fig. 2 folgende Bedingungen:

$$\forall r: -0{,}33\frac{r-r_{2i}}{r_{1o}-r_{2i}}\cdot w_i + w_i < w(r) < 2\frac{r-r_{2i}}{r_{1o}-r_{2i}}\cdot w_i + w_i$$

$$\forall r: -0{,}66\frac{r_{1o}-r}{r_{1o}-r_{2i}}\cdot w_o + w_o < w(r) < 0{,}5\frac{r_{1o}-r}{r_{1o}-r_{2i}}\cdot w_o + w_o,$$

wobei $w_o$ wiederum die durchschnittliche Gesamtweite der äußeren Elektroden 10a, 10b ist, wobei $w_i$ die durchschnittliche Gesamtweite der inneren Elektrode 20 ist, wobei $r_{1o}$ der innerste radiale Abstand der äußeren Elektroden 10a, 10b ist, und wobei $r_{2i}$ der äußerste radiale Abstand der inneren Elektrode 20 ist.

Wie in Fig. 2 dargestellt, ist der Gleichspannungs-Hochspannungsisolator 100 gemäß der zweiten Ausführungsform wiederum an einer Hochspannungsanlage für Gleichstrom einsetzbar. Beispielhaft wird die Hochspannungsanlage in Fig. 2 als gasisolierte Hochspannungsanlage angenommen. Wie gezeigt sind - analog zu der Darstellung in Fig. 1 - wiederum äußere leitfähige Stützeinrichtungen 210a, 210b in Form von Flanschen vorgesehen, welche den Grundkörper 50 im Bereich von dessen radialer Endfläche stützen und einen gasdichten Abschluss in Richtung eines Gasisolierten Innenraums gewährleisten, in welchem der Innenleiter 200 entlanggeführt ist. Als Schutzgas (Isoliergas) wird beispielhaft Schwefelhexafluorid ($SF_6$) angenommen. Die äußeren Stützeinrichtungen 210a, 210b gehen in ein metallisches Gehäuse über und liegen zusammen mit dem metallischen Gehäuse auf einem elektrischen Gehäusepotential, gegenüber welchem der Gleichspannungs-Hochspannungsisolator 100 den Innenleiter 200 isoliert.

Wiederum sind in der Ausführungsform gemäß Fig. 2 im Bereich des Innenleiters 200 innere leitfähige Stützeinrichtungen 220a, 220b in Form von Schirmelektroden vorgesehen. Diese liegen auf dem elektrischen Potential des Innenleiters 200.

Der Gleichspannungs-Hochspannungsisolator 100 gemäß der Ausführungsform in Fig. 2 erfüllt zusätzlich die nachfolgend beschriebene Bedingung. Vorzugsweise ist die nachfolgend beschriebene Bedingung in sämtlichen Querschnitten entlang der Umlaufrichtung (der $\varphi$-Richtung) erfüllt.

Jeweils ein erster Punkt P1 wird im axialen Querschnitt auf jeder Seite von der Symmetrieebene S definiert; in der Darstellung gemäß Fig. 2 ist aus Gründen der Übersichtlichkeit nur der erste Punkt P1 rechts von der Symmetrieebene S gezeigt. Der jeweilige erste Punkt P1 befindet sich auf der Oberfläche des Grundkörpers 50 in dem innersten radialen Abstand der nächstliegenden äußeren Elektrode 10a, 10b; im Falle der Darstellung gemäß Fig. 2 ist dies die rechtsseitig dargestellte äußere Elektrode 10b. Dieser radiale Abstand wird im Folgenden als erster radialer Abstand bezeichnet.

Jeweils ein zweiter Punkt $P2_l$, $P2_r$ wird im axialen Querschnitt auf jeder Seite von der Symmetrieebene S definiert; für die Erläuterung der Bedingung wird zunächst nur auf den rechtsseitig der Symmetrieebene S dargestellten zweiten Punkt $P2_r$ Bezug genommen. Der zweite Punkt $P2_r$ befindet sich auf der Oberfläche des Grundkörpers 50 bei dem 0,75-fachen des ersten radialen Abstands. Dieser radiale Abstand wird im Folgenden als zweiter radialer Abstand bezeichnet.

Durch die Punkte P1, $P2_r$ geht eine gedachte Gerade, welche im Folgenden als erste Gerade bezeichnet wird.

Außerdem wird eine erste gemeinsame Tangente definiert, welche einerseits an der Oberfläche der betreffenden äußeren Stützeinrichtung (im Fall des Beispiels aus Fig. 2 die rechts der Symmetrieebene S dargestellte äußere Stützeinrichtung 210b) anliegt, ohne sie zu schneiden, und welche andererseits auch an der Oberfläche der nächstliegenden äußeren Elektrode (im Fall des Beispiels aus Fig. 2 die rechts der Symmetrieebene S dargestellte äußere Elektrode 10b) im ersten radialen Abstand anliegt, ohne sie zu schneiden.

Die erste Gerade und die erste Tangente schließen in ihrem Schnittpunkt einen Winkel ein, der im Folgenden als erster Winkel $\alpha$ bezeichnet wird. Der erste Winkel $\alpha$ liegt im Bereich zwischen 70° und 100°, vorzugsweise im Bereich zwischen 75° und 95°, besonders vorzugsweise im Bereich zwischen 80° und 90°. In dem Ausführungsbeispiel gemäß Fig. 2 beträgt erste Winkel $\alpha$ ungefähr 85°, ist darauf aber nicht beschränkt.

Der Gleichspannungs-Hochspannungsisolator 100 gemäß der Ausführungsform in Fig. 2 erfüllt zusätzlich die nachfolgend beschriebene Bedingung. Vorzugsweise ist die nachfolgend beschriebene Bedingung in sämtlichen Querschnitten entlang der Umlaufrichtung (der $\varphi$-Richtung) erfüllt.

Jeweils ein zweiter Punkt $P2_l$, $P2_r$ ist - wie oben beschrieben - im axialen Querschnitt auf jeder Seite von der Symmetrieebene S definiert; für die Erläuterung der Bedingung wird nur auf den linksseitig der Symmetrieebene S dargestellten zweiten Punkt $P2_l$ Bezug genommen. Der zweite Punkt $P2_l$ befindet sich - wie oben beschrieben - auf der Oberfläche des Grundkörpers 50 bei dem 0,75-fachen des ersten radialen Abstands, also im zweiten radialen Abstand.

Jeweils ein dritter Punkt P3 wird im axialen Querschnitt auf jeder Seite von der Symmetrieebene S definiert; in der Darstellung gemäß Fig. 2 ist aus Gründen der Übersichtlichkeit nur der dritte Punkt P3 links von der Symmetrieebene S gezeigt. Der jeweilige dritte Punkt P3 befindet sich auf der Oberfläche des Grundkörpers 50 in dem äußersten radialen Abstand der nächstliegenden inneren Elektrode 20. Im Falle der Darstellung gemäß Fig. 2 ist nur eine innere Elektrode 20 vorgesehen; demgemäß ist dies die nächstgelegene innere Elektrode 20. Dieser radiale Abstand wird im Folgenden als dritter radialer Abstand bezeichnet.

Durch die Punkte $P2_l$, P3 geht eine gedachte Gerade, welche im Folgenden als dritte Gerade bezeichnet wird.

Außerdem wird eine zweite gemeinsame Tangente definiert, welche einerseits an der Oberfläche der betreffenden inneren Stützeinrichtung (im Fall des Beispiels aus Fig. 2 die links der Symmetrieebene S dargestellte innere Stützeinrichtung 220a) anliegt, ohne sie zu schneiden, und welche andererseits auch an der Oberfläche der nächstliegenden inneren Elektrode 20 (im Fall des Beispiels aus Fig. 2, das nur eine innere Elektrode 20 vorsieht, die einzelne innere Elektrode 20) im dritten radialen Abstand anliegt, ohne sie zu schneiden.

Die zweite Gerade und die zweite Tangente schließen in ihrem Schnittpunkt einen Winkel ein, der im Folgenden als zweiter Winkel β bezeichnet wird. Der zweite Winkel β liegt im Bereich zwischen 70° und 100°, vorzugsweise im Bereich zwischen 75° und 95°, besonders vorzugsweise im Bereich zwischen 80° und 90°. In dem Ausführungsbeispiel gemäß Fig. 2 beträgt zweite Winkel β ungefähr 95°, ist darauf aber nicht beschränkt.

Fig. 3 zeigt eine schematische Schnittansicht eines Gleichspannungs-Hochspannungsisolators 100 gemäß einer dritten Ausführungsform. Gleiche oder gleichwirkende Teile sind wiederum in den Fig. 1 und 2 sowie in Fig. 3 mit denselben Bezugszeichen versehen, und deren wiederholte Beschreibung wird hier weggelassen.

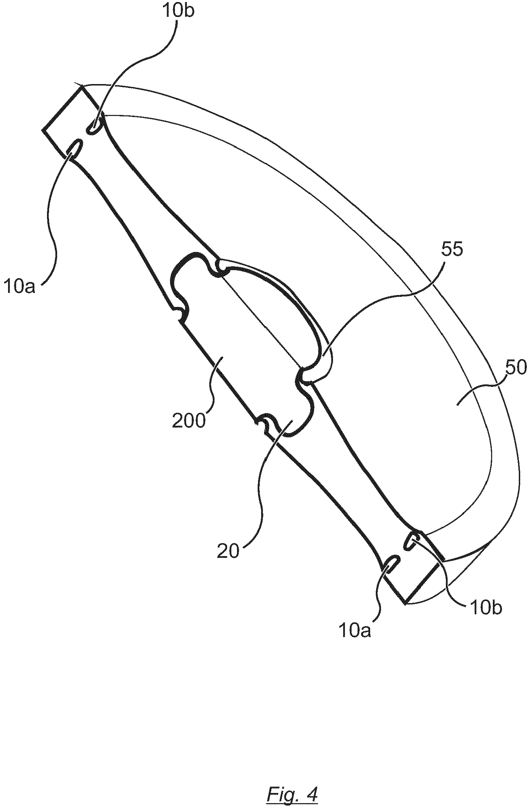

Aus Gründen der Übersichtlichkeit sind die inneren und äußeren Stützeinrichtungen in Fig. 3 nicht dargestellt. Zur Erleichterung des Verständnisses zeigt außerdem Fig. 4 eine schematische perspektivische Ansicht des Gleichspannungs-Hochspannungsisolators 100 gemäß der dritten Ausführungsform.

Der Gleichspannungs-Hochspannungsisolator 100 gemäß Fig. 3 weist wie derjenige aus Fig. 2 auch einen konkaven Verlauf auf, der jedoch ein wenig schlanker verläuft. Die innere Elektrode 20 ist derart ausgebildet, dass sie in den Innenleiter 200 übergeht; das bedeutet, dass die innere Elektrode 20 in dem dargestellten Querschnitt nicht allseitig von dem Isoliermaterial des Grundkörpers 50 umgeben ist.

In Richtung des mit Gleichstrom beaufschlagbaren Innenleiters 200 ist an der Innenelektrode 20 ein Übergangsbereich ausgebildet. Der Innenleiter 200 weist in radialer Richtung eine Begrenzungsfläche in einem radialen Abstand rb auf. Die oben im Zusammenhang mit den Fig. 1 und 2 beschriebene Definition des äußersten radialen Abstands $r_{2i}$ der inneren Elektrode 20 ist unverändert und kann in diesem Fall als Bezugsgröße dienen.

Der innerste radiale Abstand $r_{1i}$ ist in diesem Fall $r_{1i} = r_{2i} - [0{,}75 \cdot (r_{2i} - r_b)]$.

Die erste äußere Elektrode 10a und die zweite äußere Elektrode 10b des Gleichspannungs-Hochspannungsisolators 100 gemäß der dritten Ausführungsform weisen zusammen eine durchschnittliche Gesamtweite von ungefähr 29 mm auf; die Erfindung ist hierauf jedoch nicht beschränkt.

Die innere Elektrode 20 des Gleichspannungs-Hochspannungsisolators 100 gemäß der dritten Ausführungsform weist eine durchschnittliche Gesamtweite von 38,5 mm auf; die Erfindung ist hierauf jedoch nicht beschränkt.

Die dritte Ausführungsform ist insbesondere dahingehend mit der zweiten Ausführungsform kombinierbar, jedoch nicht auf diese Kombinationsmöglichkeit beschränkt, dass die dort beschriebenen Bedingungen für den ersten Winkel α und/oder für den zweiten Winkel β auch bei der dritten Ausführungsform zutreffen.

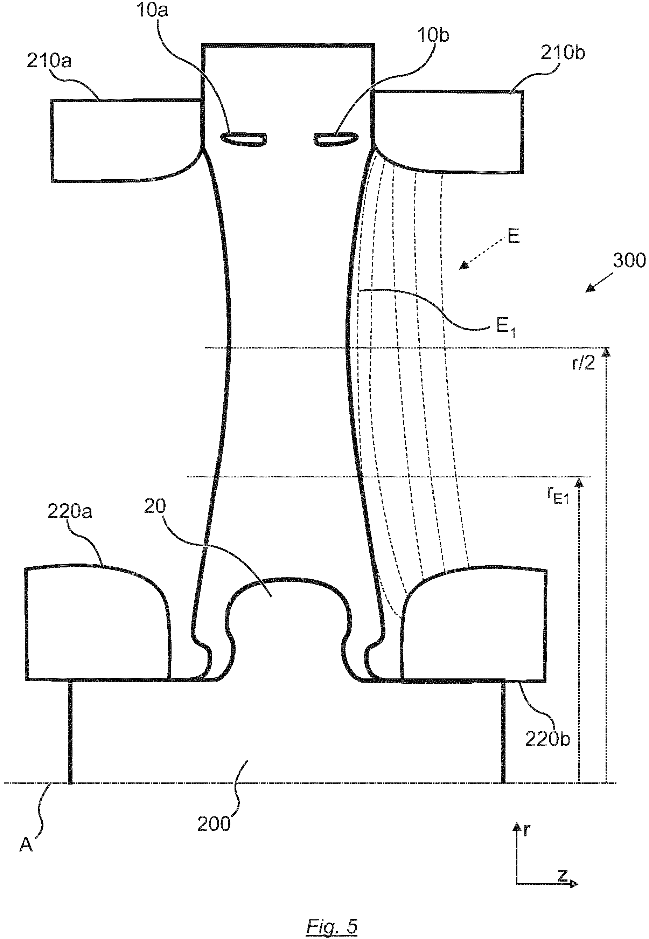

Fig. 5 zeigt in einer schematischen Schnittansicht den Gleichspannungs-Hochspannungsisolator 100 gemäß der dritten Ausführungsform zwischen äußeren leitfähigen Stützeinrichtungen 210a, 210b und inneren leitfähigen Stützeinrichtungen 220a, 220b einer gasisolierten Hochspannungsanlage. Der mit 300 bezeichnet Gasraum ist wiederum mit Schwefelhexafluorid ($SF_6$) gefüllt, welches für die angestrebten Isolationszwecke insbesondere eine vorteilhafte Durchschlagsfeldstärke aufweist. Der Innenleiter 200 der Hochspannungsanlage ist mit einer Gleichspannung beaufschlagt.

In einer FEM-Simulation wurde die Feldverteilung analysiert, insbesondere im Hinblick auf Verschiebungen der Feldverteilung durch eine Erwärmung des Isoliermaterials. Hierbei konnte ein Verlauf der elektrischen Feldlinien erhalten werden, der in der Darstellung gemäß Fig. 5 schematisch durch mehrere elektrische Feldlinien E angedeutet ist. Die Feldlinien verlaufen zwischen der äußeren leitfähigen Stützeinrichtung 210b und der inneren leitfähigen Stützeinrichtung 220b derart, dass sie ausschließlich Verbindungen in der radial inneren Hälfte auf der Oberfläche des Grundkörpers haben. Es gilt demnach

$$r < \frac{(r_{1o} + r_{2i})}{2}$$

für die Berührpunkte r sämtlicher elektrischer Feldlinien E mit der Oberfläche des Grundkörpers 50.

Dies ist in der Darstellung in Fig. 5 durch eine elektrische Feldlinie $E_1$ angedeutet, welche den Grundkörper 50 in einem radialen Abstand von $r_{E1}$ berührt.

Solche Feldlinien E, die die Oberfläche des Grundkörpers 50 außenseitig (in der Regel: gasraumseitig) schneiden, tun dies unter einem Winkel von weniger als 10°, vorzugsweise weniger als 7°, besonders vorzugsweise weniger als 5°.

Dies kann dazu beitragen, dass Normalkomponenten der Feldlinien E auf der Oberfläche des Grundkörpers 50 klein gehalten werden und zudem ein Ladungsträgertransport entlang der Feldlinien zu keinen oder nur wenigen angehäuften Ladungsträgern auf der Oberfläche des Grundkörpers 50 führt. Dadurch kann das Isolationsvermögen des Gleichspannungs-Hochspannungsisolators 100 deutlich verbessert werden.

**Patentansprüche**

1. Gleichspannungs-Hochspannungsisolator (100) zur Isolierung eines mit Gleichspannung beaufschlagten Leiters, mit:

   einem um eine Isolatorachse (A) verlaufenden Grundkörper (50) aus Isoliermaterial;
   mindestens einer innerhalb des Grundkörpers (50) verlaufenden, vorzugsweise um die Isolatorachse (A) umlaufenden äußeren Elektrode (10a, 10b);
   mindestens einer innerhalb des Grundkörpers verlaufenden, vorzugsweise um die Isolatorachse (A) umlaufenden inneren Elektrode (20);
   wobei die äußere Elektrode (10a, 10b) im Bereich der äußeren Peripherie des Grundkörpers angeordnet ist, wobei die innere Elektrode (20) im Bereich der inneren Peripherie des Grundkörpers angeordnet ist, wobei im axialen Querschnitt das Verhältnis der durchschnittlichen Gesamtweite ($w_o$) der äußeren Elektrode (10a, 10b) zu der durchschnittlichen Gesamtweite ($w_i$) der inneren Elektrode (20) mindestens 0,6, vorzugsweise mindestens 0,8, besonders vorzugsweise mindestens 1,0 beträgt.

2. Gleichspannungs-Hochspannungsisolator (100) nach Anspruch 1,
   wobei im axialen Querschnitt das Verhältnis der durchschnittlichen Gesamtweite ($w_o$) der äußeren Elektrode (10a, 10b) zu der durchschnittlichen Gesamtweite ($w_i$) der inneren Elektrode (20) maximal 1,2, vorzugsweise maximal 1,0 beträgt.

3. Gleichspannungs-Hochspannungsisolator (100) nach Anspruch 1 oder 2,
   wobei das Verhältnis der durchschnittlichen Gesamtweite ($w_i$) der inneren Elektrode (20) zu der Weite (w(r)) des Grundkörpers (50) zwischen dem innersten radialen Abstand der inneren Elektrode (20) und dem äußersten radialen Abstand der inneren Elektrode (20) mindestens 0,45, vorzugsweise mindestens 0,55, besonders vorzugsweise mindestens 0,65 beträgt,
   und/oder
   wobei das Verhältnis der durchschnittlichen Gesamtweite ($w_{o1}$, $w_{o2}$) der äußeren Elektrode (10a, 10b) zu der Weite (w(r)) des Grundkörpers (50) zwischen dem innersten radialen Abstand der äußeren Elektrode (10a, 10b) und dem äußersten radialen Abstand der äußeren Elektrode (10a, 10b) mindestens 0,45, vorzugsweise mindestens 0,55, besonders vorzugsweise mindestens 0,65 beträgt.

4. Gleichspannungs-Hochspannungsisolator (100) nach einem der vorhergehenden Ansprüche,
   wobei die Weite (w(r)) des Grundkörpers (50) in Abhängigkeit vom radialen Abstand (r) folgende Bedingungen erfüllt:

$$\forall r: -0,33 \frac{r - r_{2i}}{r_{1o} - r_{2i}} \cdot w_i + w_i < w(r) < 2 \frac{r - r_{2i}}{r_{1o} - r_{2i}} \cdot w_i + w_i$$

$$\forall r: -0,66 \frac{r_{1o} - r}{r_{1o} - r_{2i}} \cdot w_o + w_o < w(r) < 0,5 \frac{r_{1o} - r}{r_{1o} - r_{2i}} \cdot w_o + w_o$$

   wobei $w_o$ die durchschnittliche Gesamtweite der äußeren Elektrode ist, wobei $w_i$ die durchschnittliche Gesamtweite der inneren Elektrode ist, wobei $r_{1o}$ der innerste radiale Abstand der mindestens einen äußeren Elektrode (10a, 10b) ist, und wobei $r_{2i}$ der äußerste radiale Abstand der mindestens einen inneren Elektrode (20) ist.

5. Gleichspannungs-Hochspannungsisolator (100) nach einem der vorhergehenden Ansprüche,
   wobei der Grundkörper (50) im axialen Querschnitt zwischen dem äußersten radialen Abstand der inneren Elektrode (20) und dem innersten radialen Abstand der äußeren Elektrode (10a, 10b) konkav verläuft;
   wobei der Grundkörper (50) eine relative Weite $w_{rel}$ aufweist, die von einem relativen radialen Abstand x(r) abhängt und durch mindestens eine Gruppe, vorzugsweise durch mindestens zwei oder mindestens drei Gruppen, besonders vorzugsweise durch mindestens die Gruppe 1, der folgenden numerischen Stützstellen gegeben ist:

| Gruppe | 1 | 1 | 1 | 1 | 1 | 1 | 1 | 1 | 1 | 1 | |
|---|---|---|---|---|---|---|---|---|---|---|---|
| x | 0 | 0,01 | 0,02 | 0,03 | 0,04 | 0,05 | 0,06 | 0,07 | 0,08 | 0,09 | |
| $w_{rel}(x)$ | 1,000 | 0,603 | 0,510 | 0,482 | 0,504 | 0,588 | 0,838 | 0,921 | 0,915 | 0,900 | |

(fortgesetzt)

| Gruppe | 2 | 2 | 2 | 2 | 2 | 2 | 2 | 2 | 2 | 2 | |
|---|---|---|---|---|---|---|---|---|---|---|---|
| x | 0,1 | 0,11 | 0,12 | 0,13 | 0,14 | 0,15 | 0,16 | 0,17 | 0,18 | 0,19 | |
| $w_{rel}(x)$ | 0,879 | 0,850 | 0,822 | 0,794 | 0,767 | 0,740 | 0,713 | 0,688 | 0,662 | 0,637 | |
| Gruppe | 3 | 3 | 3 | 3 | 3 | 3 | 3 | 3 | 3 | 3 | |
| x | 0,2 | 0,21 | 0,22 | 0,23 | 0,24 | 0,25 | 0,26 | 0,27 | 0,28 | 0,29 | |
| $w_{rel}(x)$ | 0,613 | 0,589 | 0,565 | 0,542 | 0,520 | 0,498 | 0,476 | 0,455 | 0,435 | 0,415 | |
| Gruppe | 4 | 4 | 4 | 4 | 4 | 4 | 4 | 4 | 4 | 4 | |
| x | 0,3 | 0,31 | 0,32 | 0,33 | 0,34 | 0,35 | 0,36 | 0,37 | 0,38 | 0,39 | |
| $w_{rel}(x)$ | 0,395 | 0,376 | 0,357 | 0,339 | 0,321 | 0,304 | 0,287 | 0,271 | 0,255 | 0,240 | |
| Gruppe | 5 | 5 | 5 | 5 | 5 | 5 | 5 | 5 | 5 | 5 | |
| x | 0,4 | 0,41 | 0,42 | 0,43 | 0,44 | 0,45 | 0,46 | 0,47 | 0,48 | 0,49 | |
| $w_{rel}(x)$ | 0,225 | 0,210 | 0,196 | 0,183 | 0,170 | 0,157 | 0,145 | 0,134 | 0,122 | 0,112 | |
| Gruppe | 6 | 6 | 6 | 6 | 6 | 6 | 6 | 6 | 6 | 6 | |
| x | 0,5 | 0,51 | 0,52 | 0,53 | 0,54 | 0,55 | 0,56 | 0,57 | 0,58 | 0,59 | |
| $w_{rel}(x)$ | 0,101 | 0,092 | 0,082 | 0,074 | 0,065 | 0,057 | 0,050 | 0,043 | 0,037 | 0,031 | |
| Gruppe | 7 | 7 | 7 | 7 | 7 | 7 | 7 | 7 | 7 | 7 | |
| x | 0,6 | 0,61 | 0,62 | 0,63 | 0,64 | 0,65 | 0,66 | 0,67 | 0,68 | 0,69 | |
| $w_{rel}(x)$ | 0,025 | 0,020 | 0,015 | 0,011 | 0,008 | 0,004 | 0,002 | 0,000 | 0,002 | 0,007 | |
| Gruppe | 8 | 8 | 8 | 8 | 8 | 8 | 8 | 8 | 8 | 8 | |
| x | 0,7 | 0,71 | 0,72 | 0,73 | 0,74 | 0,75 | 0,76 | 0,77 | 0,78 | 0,79 | |
| $w_{rel}(x)$ | 0,017 | 0,029 | 0,046 | 0,066 | 0,090 | 0,118 | 0,149 | 0,185 | 0,224 | 0,268 | |
| Gruppe | 9 | 9 | 9 | 9 | 9 | 9 | 9 | 9 | 9 | 9 | |
| x | 0,8 | 0,81 | 0,82 | 0,83 | 0,84 | 0,85 | 0,86 | 0,87 | 0,88 | 0,89 | |
| $w_{rel}(x)$ | 0,315 | 0,367 | 0,424 | 0,485 | 0,550 | 0,659 | 0,697 | 0,697 | 0,697 | 0,697 | |
| Gruppe | 10 | 10 | 10 | 10 | 10 | 10 | 10 | 10 | 10 | 10 | 10 |
| x | 0,9 | 0,91 | 0,92 | 0,93 | 0,94 | 0,95 | 0,96 | 0,97 | 0,98 | 0,99 | 1 |
| $w_{rel}(x)$ | 0,697 | 0,697 | 0,697 | 0,697 | 0,697 | 0,697 | 0,697 | 0,697 | 0,697 | 0,697 | 0,697 |

wobei der relative radiale Abstand x(r) wie folgt definiert ist:

$$x(r) = \frac{r - r_{\min}}{r_{\max} - r_{\min}}$$

wobei r der radiale Abstand von der Achse (A) ist, wobei $r_{min}$ der minimale radiale Abstand des Grundkörpers (50) von der Achse (A) ist, wobei $r_{max}$ der maximale radiale Abstand des Grundkörpers (50) von der Achse (A) ist; wobei die relative Weite $w_{rel}$ wie folgt definiert ist:

$$w_{rel}(x) = \frac{w(x) - w_{\min}}{w_{\max} - w_{\min}} \pm \Delta w_{rel}$$

wobei w(x) die Weite des Grundkörpers (50) im relativen radialen Abstand x ist, wobei $w_{min}$ die minimale Weite des Grundkörpers (50) ist, wobei $w_{max}$ die maximale Weite des Grundkörpers (50) ist, und wobei $\Delta w_{rel}$ 10% beträgt.

6. Gleichspannungs-Hochspannungsisolator (100) nach einem der vorhergehenden Ansprüche,
wobei der Grundkörper (50) im axialen Querschnitt zwischen dem äußersten radialen Abstand der inneren Elektrode (20) und dem innersten radialen Abstand der äußeren Elektrode (10a, 10b) konkav verläuft;
wobei der Grundkörper (50) eine relative Weite $w_{rel}$ aufweist, die von einem relativen radialen Abstand x(r) abhängt und durch durch mindestens eine Gruppe, vorzugsweise durch mindestens zwei oder mindestens drei Gruppen, besonders vorzugsweise durch mindestens die Gruppe 1 und/oder mindestens die Gruppen 1 und 2, der folgenden numerischen Stützstellen gegeben ist:

| Gruppe | 1 | 1 | 1 | 1 | 1 | 1 | 1 | 1 | 1 | 1 | |
|---|---|---|---|---|---|---|---|---|---|---|---|
| x | 0 | 0,01 | 0,02 | 0,03 | 0,04 | 0,05 | 0,06 | 0,07 | 0,08 | 0,09 | |
| $w_{rel}(x)$ | 1,000 | 0,989 | 0,978 | 0,968 | 0,957 | 0,946 | 0,935 | 0,925 | 0,914 | 0,900 | |
| Gruppe | 2 | 2 | 2 | 2 | 2 | 2 | 2 | 2 | 2 | 2 | |
| x | 0,1 | 0,11 | 0,12 | 0,13 | 0,14 | 0,15 | 0,16 | 0,17 | 0,18 | 0,19 | |
| $w_{rel}(x)$ | 0,879 | 0,850 | 0,822 | 0,794 | 0,767 | 0,740 | 0,713 | 0,688 | 0,662 | 0,637 | |
| Gruppe | 3 | 3 | 3 | 3 | 3 | 3 | 3 | 3 | 3 | 3 | |
| x | 0,2 | 0,21 | 0,22 | 0,23 | 0,24 | 0,25 | 0,26 | 0,27 | 0,28 | 0,29 | |
| $w_{rel}(x)$ | 0,613 | 0,589 | 0,565 | 0,542 | 0,520 | 0,498 | 0,476 | 0,455 | 0,435 | 0,415 | |
| Gruppe | 4 | 4 | 4 | 4 | 4 | 4 | 4 | 4 | 4 | 4 | |
| x | 0,3 | 0,31 | 0,32 | 0,33 | 0,34 | 0,35 | 0,36 | 0,37 | 0,38 | 0,39 | |
| $w_{rel}(x)$ | 0,395 | 0,376 | 0,357 | 0,339 | 0,321 | 0,304 | 0,287 | 0,271 | 0,255 | 0,24 | |
| Gruppe | 5 | 5 | 5 | 5 | 5 | 5 | 5 | 5 | 5 | 5 | |
| x | 0,4 | 0,41 | 0,42 | 0,43 | 0,44 | 0,45 | 0,46 | 0,47 | 0,48 | 0,49 | |
| $w_{rel}(x)$ | 0,225 | 0,210 | 0,196 | 0,183 | 0,170 | 0,157 | 0,145 | 0,134 | 0,122 | 0,112 | |
| Gruppe | 6 | 6 | 6 | 6 | 6 | 6 | 6 | 6 | 6 | 6 | |
| x | 0,5 | 0,51 | 0,52 | 0,53 | 0,54 | 0,55 | 0,56 | 0,57 | 0,58 | 0,59 | |
| $w_{rel}(x)$ | 0,101 | 0,092 | 0,082 | 0,074 | 0,065 | 0,057 | 0,050 | 0,043 | 0,037 | 0,031 | |
| Gruppe | 7 | 7 | 7 | 7 | 7 | 7 | 7 | 7 | 7 | 7 | |
| x | 0,6 | 0,61 | 0,62 | 0,63 | 0,64 | 0,65 | 0,66 | 0,67 | 0,68 | 0,69 | |
| $w_{rel}(x)$ | 0,025 | 0,020 | 0,015 | 0,011 | 0,008 | 0,004 | 0,002 | 0,000 | 0,002 | 0,007 | |
| Gruppe | 8 | 8 | 8 | 8 | 8 | 8 | 8 | 8 | 8 | 8 | |
| x | 0,7 | 0,71 | 0,72 | 0,73 | 0,74 | 0,75 | 0,76 | 0,77 | 0,78 | 0,79 | |
| $w_{rel}(x)$ | 0,017 | 0,029 | 0,046 | 0,066 | 0,090 | 0,118 | 0,149 | 0,185 | 0,224 | 0,268 | |
| Gruppe | 9 | 9 | 9 | 9 | 9 | 9 | 9 | 9 | 9 | 9 | |
| x | 0,8 | 0,81 | 0,82 | 0,83 | 0,84 | 0,85 | 0,86 | 0,87 | 0,88 | 0,89 | |
| $w_{rel}(x)$ | 0,315 | 0,367 | 0,424 | 0,485 | 0,550 | 0,659 | 0,697 | 0,697 | 0,697 | 0,697 | |
| Gruppe | 10 | 10 | 10 | 10 | 10 | 10 | 10 | 10 | 10 | 10 | 10 |
| x | 0,9 | 0,91 | 0,92 | 0,93 | 0,94 | 0,95 | 0,96 | 0,97 | 0,98 | 0,99 | 1 |
| $w_{rel}(x)$ | 0,697 | 0,697 | 0,697 | 0,697 | 0,697 | 0,697 | 0,697 | 0,697 | 0,697 | 0,697 | 0,697 |

wobei der relative radiale Abstand x(r) wie folgt definiert ist:

$$x(r) = \frac{r - r_{\min}}{r_{\max} - r_{\min}}$$

wobei r der radiale Abstand von der Achse (A) ist, wobei $r_{\min}$ der minimale radiale Abstand des Grundkörpers (50) von der Achse (A) ist, wobei $r_{\max}$ der maximale radiale Abstand des Grundkörpers (50) von der Achse (A) ist; wobei die relative Weite $w_{rel}$ wie folgt definiert ist:

$$w_{rel}(x) = \frac{w(x) - w_{\min}}{w_{\max} - w_{\min}} \pm \Delta w_{rel}$$

wobei w(x) die Weite des Grundkörpers (50) im relativen radialen Abstand x ist, wobei $w_{\min}$ die minimale Weite des Grundkörpers (50) ist, wobei $w_{\max}$ die maximale Weite des Grundkörpers (50) ist, und wobei $\Delta w_{rel}$ 10% beträgt.

**7.** Gleichspannungs-Hochspannungsisolator (100) nach einem der vorhergehenden Ansprüche,
wobei der Gleichspannungs-Hochspannungsisolator (100) zumindest Teile eines Innenleiters (200) aufweist.

**8.** Gleichspannungs-Hochspannungsisolator (100) nach Anspruch 7,

wobei der Gleichspannungs-Hochspannungsisolator (100) genau eine innere Elektrode (20) aufweist, die in den Innenleiter (200) übergeht, wobei die innere Elektrode (20) eine durchschnittliche Gesamtweite im Bereich zwischen 32 mm und 42 mm, vorzugsweise im Bereich zwischen 35 mm und 40 mm, besonders vorzugsweise von ungefähr 38,5 mm aufweist;
wobei der Gleichspannungs-Hochspannungsisolator (100) genau eine erste äußere Elektrode (10a) und genau eine zweite äußere Elektrode (10b) aufweist, welche eine durchschnittliche Gesamtweite im Bereich zwischen 25 mm und 35 mm, vorzugsweise im Bereich zwischen 28 mm und 33 mm, besonders vorzugsweise von ungefähr 29 mm aufweisen;
wobei der Grundkörper im axialen Querschnitt zwischen dem äußersten radialen Abstand der inneren Elektrode und dem innersten radialen Abstand der äußeren Elektrode konkav verläuft;
wobei der Grundkörper beim äußersten radialen Abstand der inneren Elektrode eine Weite im Bereich zwischen 48 mm und 58 mm, vorzugsweise im Bereich zwischen 50 mm und 55 mm, besonders vorzugsweise von ungefähr 52,5 mm aufweist; und
wobei der Grundkörper beim innersten radialen Abstand der äußeren Elektrode eine Weite im Bereich zwischen 40 mm und 50 mm, vorzugsweise im Bereich zwischen 43 mm und 48 mm, besonders vorzugsweise von ungefähr 45,5 mm aufweist.

**9.** Gleichspannungs-Hochspannungsisolator (100) nach einem der vorhergehenden Ansprüche,
wobei der Grundkörper (50) des Isolatorkörpers (50) als Scheibenisolator-Grundkörper ausgebildet ist.

**10.** Gleichspannungs-Hochspannungsisolator (100) nach einem der vorhergehenden Ansprüche,
wobei die mindestens eine äußere Elektrode (10a, 10b) nach außerhalb des Gleichspannungs-Hochspannungsisolators (100) kontaktierbar oder kontaktiert ist und/oder auf ein definiertes äußeres elektrische Potential bringbar ist oder gebracht ist; und/oder
wobei die mindestens eine innere Elektrode (20) nach außerhalb des Gleichspannungs-Hochspannungsisolators (100) kontaktierbar oder kontaktiert ist und/oder auf ein definiertes äußeres elektrische Potential bringbar ist oder gebracht ist.

**11.** Hochspannungsanlage für Gleichstrom, insbesondere gasisolierte Hochspannungsanlage für Gleichstrom, mit:

- einem Gleichspannungs-Hochspannungsisolator (100) nach einem der Ansprüche 1 bis 8; und
- einem mit Gleichspannung beaufschlagbaren Innenleiter (200).

**12.** Hochspannungsanlage nach Anspruch 11, die ferner mindestens eine äußere leitfähige Stützeinrichtung (210a, 210b) im Bereich der äußeren Peripherie aufweist,
wobei ein erster Winkel ($\alpha$) von folgenden Geraden eingeschlossen wird:

- einer ersten Geraden durch einen ersten Punkt (P1) und einen zweiten Punkt (P2) jeweils auf der Seite, welche der betreffenden äußeren leitfähigen Stützeinrichtung (210a, 210b) zugewandt ist, wobei sich der erste Punkt (P1) auf der Oberfläche des Grundkörpers (50) in einem ersten radialen Abstand ($r_{1o}$) von der Isolatorachse (A) befindet, der der innerste radiale Abstand der nächstliegenden äußeren Elektrode (10a, 10b) ist, und wobei sich der zweite Punkt (P2) auf der Oberfläche des Grundkörpers (50) in einem zweiten radialen Abstand von der Isolatorachse (A) befindet, der dem 0,75-fachen des ersten radialen Abstands entspricht; und
- einer ersten gemeinsamen Tangente an die Oberfläche der betreffenden äußeren leitfähigen Stützeinrichtung (210a, 210b) und an die Oberfläche, im ersten radialen Abstand ($r_{1o}$), der nächstliegenden äußeren Elektrode (10a, 10b),

wobei der erste Winkel ($\alpha$) im Bereich zwischen 70°...100°, vorzugsweise im Bereich zwischen 75°...95°, besonders vorzugsweise im Bereich zwischen 80° und 90° liegt.

**13.** Hochspannungsanlage nach Anspruch 11 oder 12, die ferner mindestens eine innere leitfähige Stützeinrichtung (220a, 220b) im Bereich der inneren Peripherie, vorzugsweise am Innenleiter (200), aufweist,
wobei ein zweiter Winkel ($\beta$) von folgenden Geraden eingeschlossen wird:

- einer zweiten Geraden durch einen zweiten Punkt (P2) und einen dritten Punkt (P3) jeweils auf der Seite, welche der betreffenden inneren leitfähigen Stützeinrichtung (220a, 220b) zugewandt ist, wobei sich der zweite Punkt (P2) auf der Oberfläche des Grundkörpers (50) in einem zweiten radialen Abstand von der Isolatorachse (A) befindet, der dem 0,75-fachen eines ersten radialen Abstands entspricht, wobei der erste radiale Abstand der innerste radiale Abstand der mindestens einen äußeren Elektrode (10a, 10b) ist, und wobei sich der dritte Punkt (P3) auf der Oberfläche des Grundkörpers (50) in einem dritten radialen Abstand $(r_{2i})$ von der Isolatorachse (A) befindet, der der äußerste radiale Abstand der nächstliegenden inneren Elektrode (20) ist; und
- einer zweiten gemeinsamen Tangente an die Oberfläche der betreffenden inneren leitfähigen Stützeinrichtung (220a, 220b) und an die Oberfläche, im dritten radialen Abstand $(r_{2i})$, der nächstliegenden inneren Elektrode (20),

wobei der zweite Winkel ($\beta$) im Bereich zwischen 70°...100°, vorzugsweise im Bereich zwischen 75°...95°, besonders vorzugsweise im Bereich zwischen 80° und 90° liegt.

14. Hochspannungsanlage nach Anspruch 13,
wobei die Weite des Grundkörpers (50) im radialen Abstand des dritten Punkts (P3) kleiner als der Mittelwert der Weite des Grundkörpers (50) zwischen dem radialen Abstand des ersten Punkts (P1) und dem 0,4-fachen des ersten radialen Abstands $(r_{1o})$ ist.

15. Verwendung eines Gleichspannungs-Hochspannungsisolators nach einem der Ansprüche 1 bis 10 in einer Hochspannungsanlage für Gleichstrom nach einem der Ansprüche 11 bis 13, insbesondere einer gasisolierten Hochspannungsanlage für Gleichstrom, wobei der mindestens eine Innenleiter (200) mit Gleichspannung beaufschlagt ist.

16. Verwendung nach Anspruch 15,
wobei der Verlauf der Weite (w(r)) des Grundkörpers (50) in Abhängigkeit vom radialen Abstand zu der Isolatorachse (A) derart gestaltet ist, dass die elektrischen Feldlinien (E), welche die Oberfläche des Grundkörpers (50) mit einem schaltanlagenseitigen Gehäuse und/oder mit dem Innenleiter (200) und/oder mit einer schaltanlagenseitigen Abschirmung, insbesondere einer gasseitigen Abschirmung verbinden, ausschließlich Verbindungen auf der Oberfläche des Grundkörpers aufweisen, die in einem Bereich für r liegen, für welchen die folgende Bedingung erfüllt ist:

$$r < \frac{(r_{1o} + r_{2i})}{2}$$

wobei $r_{1o}$ der innerste radiale Abstand der mindestens einen äußeren Elektrode (10a, 10b) ist, und wobei $r_{2i}$ der äußerste radiale Abstand der mindestens einen inneren Elektrode (20) ist.

17. Verwendung nach Anspruch 16,
wobei ein Winkel zwischen den elektrischen Feldlinien und der Oberfläche des Grundkörpers (50) in einem Punkt, in dem die Feldlinie die Isolatoroberfläche außenseitig schneidet, kleiner als 10°, vorzugsweise kleiner als 7°, besonders vorzugsweise kleiner als 5° ist.

*Fig. 1*

*Fig. 2*

*Fig. 3*

_Fig. 4_

*Fig. 5*

Europäisches
Patentamt

European
Patent Office

Office européen
des brevets

# EUROPÄISCHER RECHERCHENBERICHT

**Nummer der Anmeldung**

EP 15 18 4845

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP H03 198613 A (MITSUBISHI ELECTRIC CORP) 29. August 1991 (1991-08-29) * Zusammenfassung; Abbildung 1 * ----- | 1-3,7, 9-11,15 | INV. H02G5/06 |
| X | EP 0 750 379 A2 (MITSUBISHI ELECTRIC CORP [JP]) 27. Dezember 1996 (1996-12-27) * Abbildungen 1, 10 * ----- | 1,2,7, 9-11,15 | |
| A | EP 0 457 081 A1 (ASEA BROWN BOVERI [CH]) 21. November 1991 (1991-11-21) * Abbildung 3 * ----- | 1,9 | |
| A | JP 2000 253548 A (TOSHIBA CORP) 14. September 2000 (2000-09-14) * Zusammenfassung; Abbildungen * ----- | 11,16 | |

**RECHERCHIERTE SACHGEBIETE (IPC)**

H02G

Der vorliegende Recherchenbericht wurde für alle Patentansprüche erstellt

| Recherchenort | Abschlußdatum der Recherche | Prüfer |
|---|---|---|
| Den Haag | 18. März 2016 | Starck, Thierry |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
...............................................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 15 18 4845

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-03-2016

| Im Recherchenbericht angeführtes Patentdokument | Datum der Veröffentlichung | Mitglied(er) der Patentfamilie | Datum der Veröffentlichung |
|---|---|---|---|
| JP H03198613 A | 29-08-1991 | JP H0732528 B2<br>JP H03198613 A | 10-04-1995<br>29-08-1991 |
| EP 0750379 A2 | 27-12-1996 | CN 1139306 A<br>DE 69621378 D1<br>DE 69621378 T2<br>EP 0750379 A2<br>JP 3588401 B2<br>JP H0970126 A<br>US 5723813 A | 01-01-1997<br>04-07-2002<br>23-01-2003<br>27-12-1996<br>10-11-2004<br>11-03-1997<br>03-03-1998 |
| EP 0457081 A1 | 21-11-1991 | DE 4015929 A1<br>EP 0457081 A1<br>JP 3424937 B2<br>JP H04229512 A | 21-11-1991<br>21-11-1991<br>07-07-2003<br>19-08-1992 |
| JP 2000253548 A | 14-09-2000 | KEINE | |

EPO FORM P0461

Für nähere Einzelheiten zu diesem Anhang : siehe Amtsblatt des Europäischen Patentamts, Nr.12/82